(19) **Europäisches Patentamt**

**European Patent Office**

**Office européen des brevets**

(11) **EP 1 061 756 A1**

(12) **EUROPEAN PATENT APPLICATION**
published in accordance with Art. 158(3) EPC

(43) Date of publication:
20.12.2000 Bulletin 2000/51

(51) Int. Cl.⁷: **H04Q 7/32**

(21) Application number: **99905232.7**

(86) International application number:
**PCT/JP99/00722**

(22) Date of filing: **18.02.1999**

(87) International publication number:
**WO 99/43173 (26.08.1999 Gazette 1999/34)**

(84) Designated Contracting States:
**DE ES FI FR GB IT NL**

(30) Priority: **18.02.1998 JP 3640798**

(71) Applicant: **AIWA CO., LTD.**
**Taito-ku, Tokyo 110-0008 (JP)**

(72) Inventors:
• **ADACHI, Naofumi,**
**Aiwa Co., Ltd.**
**Tokyo 110-0008 (JP)**

• **OOTAKE, Akira,**
**Aiwa Co., Ltd.**
**Tokyo 110-0008 (JP)**

(74) Representative:
**Müller, Frithjof E., Dipl.-Ing. et al**
**Patentanwälte**
**MÜLLER & HOFFMANN,**
**Innere Wiener Strasse 17**
**81667 München (DE)**

(54) **COMMUNICATION SYSTEM AND COMMUNICATION TERMINAL**

(57) Allowing to obtain positional information of a second communication terminal device at any position by means of a first communication terminal device, without providing communication terminal devices with a large capacity memory means.

A center 13 comprises a memory means storing a plurality of combinations of base station identification information group and corresponding positional information thereto. A terminal 11 transmits a telephone number S11 of a terminal 12 to the center 13, upon positional information acquisition operation (ST111, St112). The center 13 transmits a request signal S12 to the terminal 12 (ST132) and the terminal 13 transmits base station identification information group S13 in response (ST121, ST122). The information group S13 is composed of base station identification information concerning control channels whose receive signal strength indicate is comprised within a predetermined number of higher ranks among base station identification information obtained by sequentially receiving control channels of available public base stations. The center 13 obtains a positional information S14 of the terminal 12, using the information signal S13 and memory contents of the memory means, and transmits the same to the terminal 11 (ST133, ST134).

**FIG. 9**

**Description**

**TECHNICAL FIELD**

The present invention concerns a communication system and a communication terminal device used for the same. To be more specific, it concerns a communication system or the like allowing to obtain easily positional information indicating the location of a second communication terminal device at any position by means of a first communication terminal device, without providing the first and the second communication terminal devices with a large capacity memory means, by such composition that base station identification information group or base station identification information group and receive signal strength indicate data obtained by the second communication terminal device (searched side terminal) are sent to a service center, the second communication terminal device positional information is obtained by this service center, and this positional information is sent to the first communication terminal device (searching side terminal).

**PRIOR ART**

In recent years, communication terminal devices, for example, PHS (Personal Handyphone System) are reducing in their size and weight, allowing to carry them more easily. Usually, the position of a cellular phone carrier can be confirmed by calling this cellular phone and communicating with the carrier.

However, when the carrier, such as infant or child, is not familiar with his/her location, it is sometimes difficult to know his/her location, even by calling the telephone carried him/her and talking with the carrier.

In this situation, it can be devised to allow the reception side to know the carrier location easily, by such composition that the cellular phone is provided with a memory means wherein a plurality of combinations of base station identification information group (CS-ID group) and corresponding positional information thereof, the cellular phone can obtain its own positional information using this memory means, and this positional information is sent to the reception side. In this case, the cellular phone compares base station identification information group composed of base station identification information obtained by sequentially receiving control channels of available public base stations, and respective base station identification information group of the plurality of combinations stored in the memory means, and the positional information composing the combination wherein the number of agreement of base station identification information is maximum will be obtained as its own positional information.

However, if a memory means storing a plurality of combinations of base station identification information group (CS-ID group) and corresponding positional information thereof is to be provided, the cellular phone will have a large capacity memory means, increasing the cellular phone cost considerably.

Therefore, the present invention has an object to provide a communication system or the like allowing to obtain positional information indicating the location of a second communication terminal device at any position by a first communication terminal device, without providing the first and the second communication terminal devices with a large capacity memory.

**DISCLOSURE OF THE INVENTION**

According to the invention of a first aspect, a communication terminal device comprises a transmission means for sending the telephone number of other communication terminal device whose positional information is to be obtained to a service center, a reception means for receiving positional information of the other communication terminal device transmitted by the service center, and a reporting means for reporting the location indicated by the positional information received by this reception means.

According to the invention of a second aspect, a communication terminal device comprises an information acquisition means for acquiring transmission information necessary to obtain positional information indicating its own location from a service center, a reception means for receiving request signal of transmission information sent by the service center, and a transmission means for sending transmission information obtained by the information acquisition means, when this reception means receives the request signal of transmission information.

For instance, the transmission information is base station identification information group composed of base station identification information concerning control channels whose receive signal strength indicate is comprised within a predetermined number of higher ranks among base station identification information obtained by sequentially receiving control channels of available public base stations, or this base station identification information group and receive signal strength indicate data of the time when respective base station identification information composing this base station identification information group is obtained. For example, the information acquisition means execute the operation to obtain transmission information periodically. For example, the information acquisition means execute the operation to obtain transmission information, when the reception means receives the request signal of transmission information.

According to the invention of a seventh aspect, a communication system comprises a first communication terminal device of the first aspect, a second communication terminal device of the second aspect, and a service center. The service center comprises a third reception means for receiving the second communication terminal device telephone number sent from the first communication terminal device, a third transmission means for sending transmission information request signal to the second communication terminal device based on the second communication terminal device telephone number received by this third reception means, a fourth reception means for receiving transmission information sent from the second communication terminal device, an information processing means for obtaining positional information indicating the location of the second communication terminal device based on transmission information received by this fourth reception means, and a fourth transmission means for sending the positional information obtained by this information processing means to the first communication terminal device.

When the second communication terminal device telephone number is sent from the first communication terminal device to the service center for obtaining positional information, transmission information request signal is sent from the service center to the second communication terminal device, and transmission information (base station identification information group or base station identification information group and receive signal strength indicate data) is sent from the second communication terminal device to the service center in response to this request signal.

The service center information processing means allows to obtain the positional information indicating the location of the second communication terminal device based on transmission information sent from the second communication terminal device. This positional information is sent to the first communication terminal device. Then, the first communication terminal device reporting means reports the location indicated by this positional information, namely the location of the second communication terminal device. For instance, the location is displayed by character string or image on a display section, or location announcing sound is emitted from a sound output section. This allows to obtain easily positional information indicating the location of the second communication terminal device at any position by means of the first communication terminal device, without providing the first and the second communication terminal devices with a large capacity memory means.

According to the invention of a fourteenth aspect, a communication terminal device comprises a transmission means for sending positional information request signal to other communication terminal device, a reception means for receiving positional information indicating the location of the other communication terminal device sent by the other communication terminal device, and a reporting means for reporting the location indicated by the positional information received by this reception means.

According to the invention of a fifteenth aspect, a communication terminal device comprises an information acquisition means for obtaining transmission information necessary to obtain positional information indicating its own location from a service center, a first reception means for receiving positional information request signal sent by the other communication terminal device, a first transmission means for sending transmission information obtained by the information acquisition means to the service center, a second reception means for receiving positional information indicating its own location sent from the service center, and a second transmission means for sending the positional information received by this second reception means to the other communication terminal device.

According to the invention of a twentieth aspect, a communication system comprises the first communication terminal device of the fourteenth, the second communication terminal device of the fifteenth, and a service center. The service center comprises a fourth reception means for receiving transmission information sent from the second communication terminal device, an information processing means for obtaining positional information indicating the location of the second communication terminal device based on transmission information received by this fourth reception means, and a fourth transmission means for sending the positional information obtained by this information processing means to the second communication terminal device.

When positional information request signal is sent from the first communication terminal device to the to the second communication terminal device, transmission information is sent from the second communication terminal device to the service center in response to this request signal. The service center information processing means allows to obtain the positional information indicating the location of the second communication terminal device based on transmission information sent from the second communication terminal device. This positional information is sent to the first communication terminal device trough the second communication terminal device. Then the first communication terminal device reporting means reports the location indicated by this positional information, namely the location of the second communication terminal device. This allows to obtain easily positional information indicating the location of the second communication terminal device at any position by means of the first communication terminal device, without providing the first and the second communication terminal devices with a large capacity memory means.

According to the invention of a twenty-sixth aspect, a communication terminal device comprises a first transmission means for sending, to other communication terminal device, transmission information request signal necessary to obtain positional information indicating the location of the other communication terminal device from a service center, a first reception means for receiving transmission information sent from the other communication terminal device, a second transmission means for sending the transmission information received by this first reception means to the service center, a second reception means for receiving positional information indicating the location of the other communication terminal device sent from the service center, and a reporting means for reporting the location indicated by the positional information received by this second reception means.

According to the invention of a twenty-seventh aspect, a communication terminal device comprises an information acquisition means for obtaining transmission information necessary to obtain positional information indicating its own location from a service center, a reception means for receiving positional information request signal sent from the other communication terminal device, and a transmission means for sending the transmission information obtained by the information acquisition means to the other communication terminal device.

According to the invention of a thirty-second aspect, a communication system comprises the first communication terminal device of the twenty-sixth aspect, the second communication terminal device of the twenty-seventh aspect, and a service center. The service center comprises a fourth reception means for receiving transmission information sent from the first communication terminal device, an information processing means for obtaining positional information indicating the location of the second communication terminal device based on transmission information received by this fourth reception means, and a fourth transmission means for sending the positional information obtained by this information processing means to the first communication terminal device.

When transmission information (base station identification information group or base station identification information group and receive signal strength indicate data) request signal is sent from the first communication terminal device to the to the second communication terminal device, transmission information is sent from the second communication terminal device to the service center through the first communication terminal device in response to this request signal. The service center information processing means allows to obtain the positional information indicating the location of the second communication terminal device based on transmission information sent from the second communication terminal device. This positional information is sent to the first communication terminal device. Then the first communication terminal device reporting means reports the location indicated by this positional information, namely the location of the second communication terminal device. This allows to obtain easily positional information indicating the location of the second communication terminal device at any position by means of the first communication terminal device, without providing the first and the second communication terminal devices with a large capacity memory means.

According to the invention of a thirty-eighth aspect, a communication terminal device comprises a transmission means for sending positional information request signal to other communication terminal device, a reception means for receiving positional information indicating the location of the other communication terminal device sent from the service center, and a reporting means for reporting the location indicated by the positional information received by this reception means.

According to the invention of a thirty-ninth aspect, a communication terminal device comprises an information acquisition means for obtaining transmission information necessary to obtain positional information indicating its own location from a service center, a reception means for receiving positional information request signal sent by the other communication terminal device, and a transmission means for sending transmission information obtained by the information acquisition means and the telephone number of said other communication terminal device to the service center.

According to the invention of a forty-fourth aspect, a communication system comprises the first communication terminal device of the thirty-eighth aspect, the second communication terminal device of the thirty-ninth aspect, and a service center. The service center comprises a third reception means for receiving transmission information sent from the second communication terminal device and the telephone number of the first communication terminal device, an information processing means for obtaining positional information indicating the location of the second communication terminal device based on transmission information received by this third reception means, and a third transmission means for sending the positional information obtained by this information processing means to the first communication terminal device, using the telephone number of the first communication terminal device received by the third reception means.

When positional information request signal is sent from the first communication terminal device to the to the second communication terminal device, transmission information (base station identification information group or base station identification information group and receive signal strength indicate data) and the telephone number of the first communication terminal device are sent from the second communication terminal device to the service center in response to this request signal.

The service center information processing means allows to obtain the positional information indicating the location of the second communication terminal device based on transmission information sent from the second communication terminal device. This positional information is sent to the first communication terminal device. Then the first communication terminal device reporting means reports the location indicated by this positional information, namely the location of the second communication terminal device. This allows to obtain easily positional information indicating the location of the second communication terminal device at any position by means of the first communication terminal device, without providing the first and the second communication terminal devices with a large capacity memory means.

## BRIEF DESCRIPTION OF DRAWINGS

Fig. 1 is a block diagram showing an outline composition of a communication system according to a first embodiment.

Fig. 2 is a block diagram showing a composition of a personal handyphone system (PHS) composing the communication system.

Fig. 3 is a drawing showing a composition of a logical control channel (LCCH).

Fig. 4 is a drawing showing a composition of a BCCH.

Fig. 5 is a drawing showing a composition of a SCCH.

Fig. 6 is a drawing showing a composition of a PCH.

Fig. 7 is a drawing showing PCH intermittent reception operation in stand-by state.

Fig. 8 is a drawing showing a composition of a communication physical slot during communication.

Fig. 9 is a control sequence diagram for illustrating the operation of the communication system according to the first embodiment.

Fig. 10 is a block diagram showing outline composition of a communication system according to a second embodiment.

Fig. 11 is a control sequence diagram for illustrating the operation of the communication system according to the second embodiment.

Fig. 12 is a block diagram showing outline composition of a communication system according to a third embodiment.

Fig. 13 is a control sequence diagram for illustrating the operation of the communication system according to the third embodiment.

Fig. 14 is a block diagram showing outline composition of a communication system according to a fourth embodiment.

Fig. 15 is a control sequence diagram for illustrating the operation of the communication system according to the fourth embodiment.

Fig. 16 illustrates the positional information computation method in the service center.

## PREFERRED EMBODIMENT OF THE INVENTION

Now, embodiments of the communication system of the invention will be described referring to drawings.

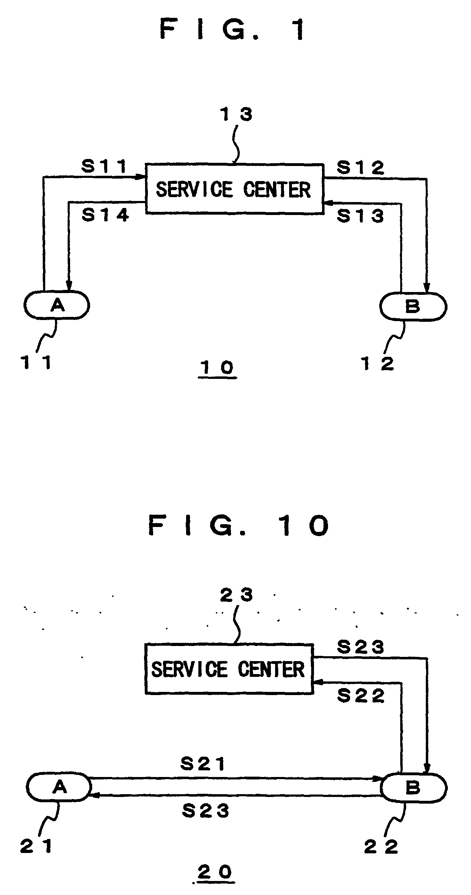

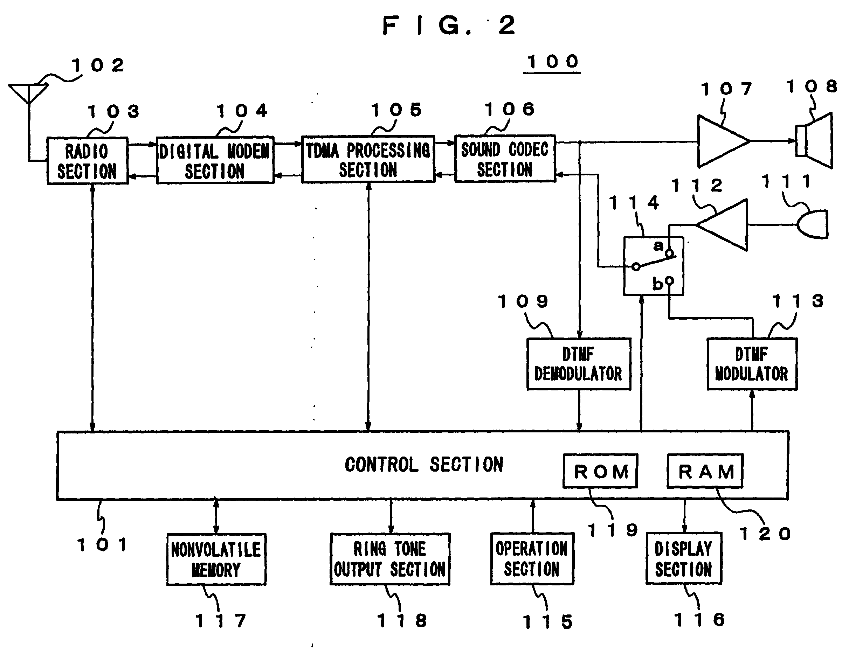

Fig. 1 shows an outline composition of a communication system 10 according to a first embodiment. The communication system 10 comprises a terminal 11 (terminal A), a terminal 12 (terminal B) and a service center 13. The terminal 11 and the terminal 12 can be connected to the service center 13 respectively via a line (not shown). Fig. 2 shows a composition of a personal handyphone system (PHS) 100 used as terminal 11 and 12.

The PHS 100, composed of a microcomputer, comprises a control section 101 for controlling the whole system, an antenna 102 for transmission/reception, a radio section 103 for obtaining π/4 shift QPSK (Quadrature Phase Shift Keying) signal by down-converting a reception signal of a predetermined frequency captured by this antenna 102 and, at the same time, for obtaining a transmission signal of a predetermined frequency by up-converting π/4 shift QPSK signal output from a digital modem section mentioned below, and the digital modem section 104 for obtaining reception data by demodulating the π/4 shift QPSK signal output from this radio section 103 and, at the same time, for obtaining π/4 QPSK signal by modulating the transmission data output from a TDMA (Time Division Multiple Access) processing section mentioned below.

Moreover, the PHA 100 comprises the TDMA processing section 105 for selecting data of a predetermined downward slot from reception data (dime division multiple data of a plurality of slots) output from the digital modem section 104, dividing into control data and compressed sound data and, at the same time, multiplexing compressed sound data output from a sound codec section mentioned below and control data output from the control section 101 to a predetermined upward slot.

In addition, the PHS 100 comprises the sound codec section 106 for obtaining reception sound signal by demodulating (including error correction) the compressed sound data output from the TDMA processing section 105 and, at the same time, obtaining compressed sound data by compression encoding (including addition of error correction code) the transmission sound signal, a low frequency amplifier 107 for amplifying the reception sound signal output from this sound codec section 106, a speaker 108 as receiver for outputting sound by the output sound signal of this amplifier 107, and a DTMF demodulator 109 for obtaining 4-bit (1 nibble) DTMF signal code by demodulating DTMF signal, if the reception sound signal output from the sound coded section 106 is DTMF signal. In this case, the DTMF signal code obtained by the DTMF demodulator 109 is supplied to the control section 101.

Besides, the PHS 100 comprises a microphone 111 as transmitter, a low frequency amplifier 112 for amplifying the sound signal output from this microphone 111, a DTMF modulator 113 for converting DTMF signal code supplied by the control section 101 into DTMF signal, and a changeover switch 114 for selectively picking up the amplifier 112 output sound signal or the DTMF modulator 113 output DTMF signal and delivering to the sound coded section 106 as transmission sound signal.

In this case, the amplifier 112 output side is connected to the changeover switch 114 a side fixed terminal, and the DTMF modulator 113 output side to the b side fixed terminal thereof. The changeover switch 114 controlled by the control section 101 is connected to the b side to transmit DTMF signal, and to the a side for other communication or the like.

Moreover, the PHS 100 comprises an operation section 115 allowing the operator to execute various key operations, a display section 116 composed of liquid crystal display or the like, a non-volatile memory 117 for storing a telephone directory, character message data or the like, and a ring tone output section 118 for outputting a ring tone under the control of the control section 101 upon the call. These operation section 115, display section 116, non-volatile memory 117 and ring tone output section 118 are respectively connected to the control section 101.

Here, the operation section 115 is provided with a communication for originating the call and for responding to the call, a ring-off key for clearing the communication, numeric keys for composing the telephone number, a key for retrieving the telephone directory, a key for obtaining positional information of other PHS, or the like. The display section 116 displays, in addition to system state, telephone directory data selected by retrieving the telephone directory, telephone number composed by numeric keys, location indicated by the positional information obtained from the other PHS, or others.

The control section 101 comprises a ROM (read only memory) 119 where, though not mentioned above, microcomputer operating program, conversion format for converting DTMF signal code into character code or others, and a work RAM (random access memory) 120 for temporarily writing DTMF signal code or the like obtained by the DTMF demodulator 109.

Next, the operation of the PHS 100 will be described. When the power is turned on, as it is out of synchronization with the control channel, the synchronization with the control channel is established by receiving control channel transmitted from a base station. In this case, a so-called short-tracking is performed for sequentially receiving control channels of available public base stations, selecting a control channel whose RSSI (Receive Signal Strength Indicate) is equal or superior to the selected level and maximum, and establishing the synchronization with that control channel. Thereafter, the location being in the base station area pertaining to the synchronized control channel is registered. This location registration is executed using the communication channel. After the location registration, it returns to the reception state of the synchronized control channel and remains in stand-by state.

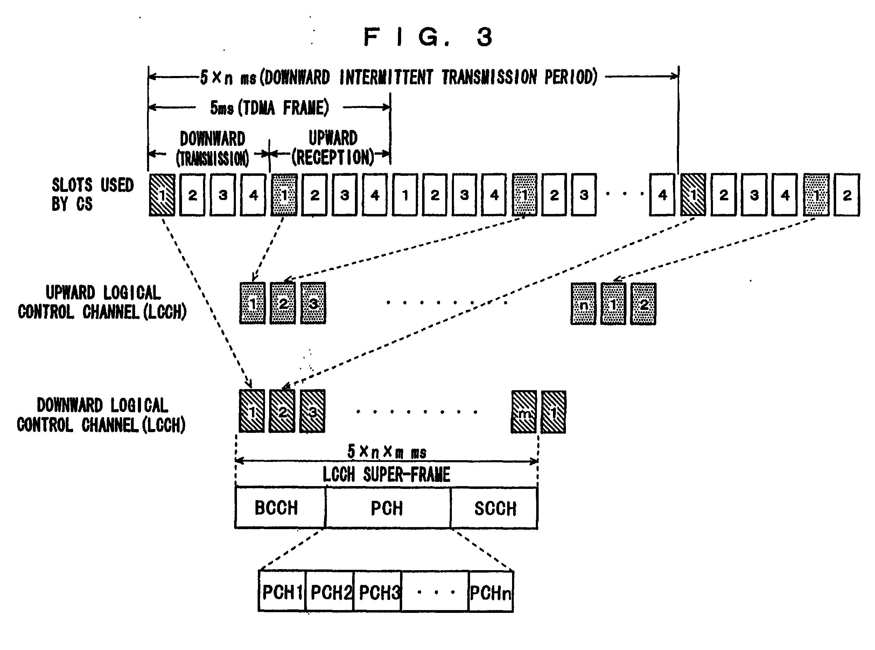

Fig. 3 shows a composition of a logical control channel (LCCH). However, it is an example wherein the TDMA frame first slot is assigned the logical control channel (LCCH) and LCCH super frame is composed of intermittent slot for m by every nTDMA frames.

For the slot used by the base station (CS), 5[ms] TDNA frame is composed of downward (transmission) 4 slots and following upward (reception) 4 slots. There, slots composing the downward logical control channel (LCCH) exists every nTDMA frames. In other words, the downward intermittent transmission period is 5 x n[ms].

On the other hand, the shortest cycle (5 x n x m[ms]) of the downward logical control channel (LCCH) designating slot position of all LCCH elements is defined as LCCH super frame. The downward logical control channel (LCCH) is composed of reporting channel (BCCH), paging channel (PCH) and individual cell channel (SCCH). BCCH is transmitted by the LCCH super frame's leading slot, the this BCCH transmission allows to communicate the LCCH leading head position. On the other hand, the upward logical control channel (LCCH) is composed of individual cell channel (SCCH). The upward logical control channel (LCCH) slot position is transmitted from the base station (CS) to the mobile station (PS) by control carrier composition information elements in the radio channel information reporting message on the BCCH.

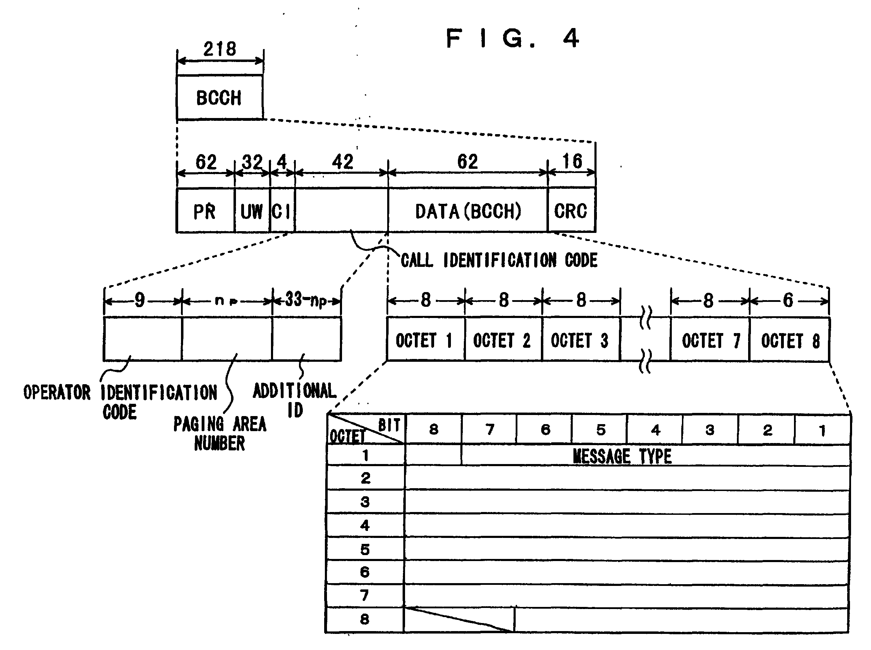

Fig. 4 shows a composition of a BCCH. BCCH is a downward one-way channel to inform PS of control information from CS. Channel structure information, system information or the like is transferred by this BCCH.

BCCH is composed of preamble pattern (PR), synchronization word (UW), channel type code (CI), transmission identification code, data (BCCH) and cyclic error detection signal (CRC). The transmission identification code (CS-ID) is composed of operator identification code, paging area number and additional ID. Beside, data (BCCH) is composed of octet 1 - octet 8. There, octet 1's lower 7 bits indicates the message type by octet 2 - octet 8.

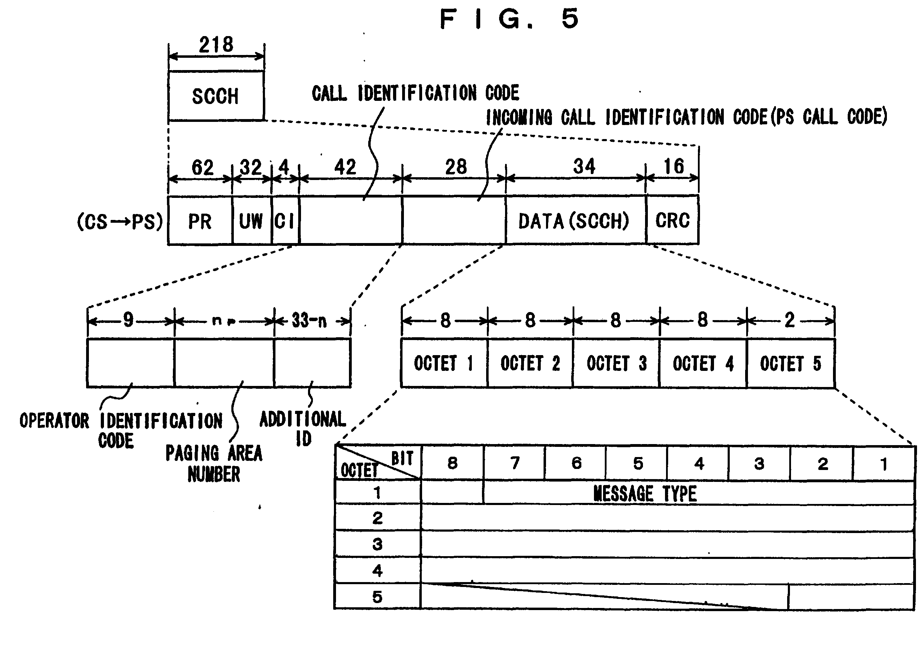

Fig. 5 shows a composition of a SCCH. SCCH is a point to point bi-directional channel for transferring information necessary for transmission connection between CS and PS. IN this SCCH, independent information for every cell is transferred.

SCCH is composed of preamble pattern (PR), synchronization word (UW), channel type code (CI), transmission identification code, reception identification code, data (SCCH) and cyclic error detection signal (CRC). There, in SCCH (downward), the transmission identification code (CS-ID) is composed of operator identification code, paging area number and additional ID, while the reception identification code is composed of PS calling code (PS-ID). Though not shown, in SCCH (upward), the aforementioned transmission identification code becomes reception identification code, and the aforementioned reception identification becomes transmission identification code. Beside, data (SCCH) is composed of octet 1 - octet 5. There, octet 1's lower 7 bits indicates the message type by octet 2 - octet 5.

PCH is a point to multipoint downward one-way channel for generally transferring the same information to a large area (paging area) of single cell or a plurality of cells. CS informs PS of reception by means of this PCH. As shown in Fig. 3, a plurality of PCHs (PCH1 to PCHn) exist in the LCCH super frame.

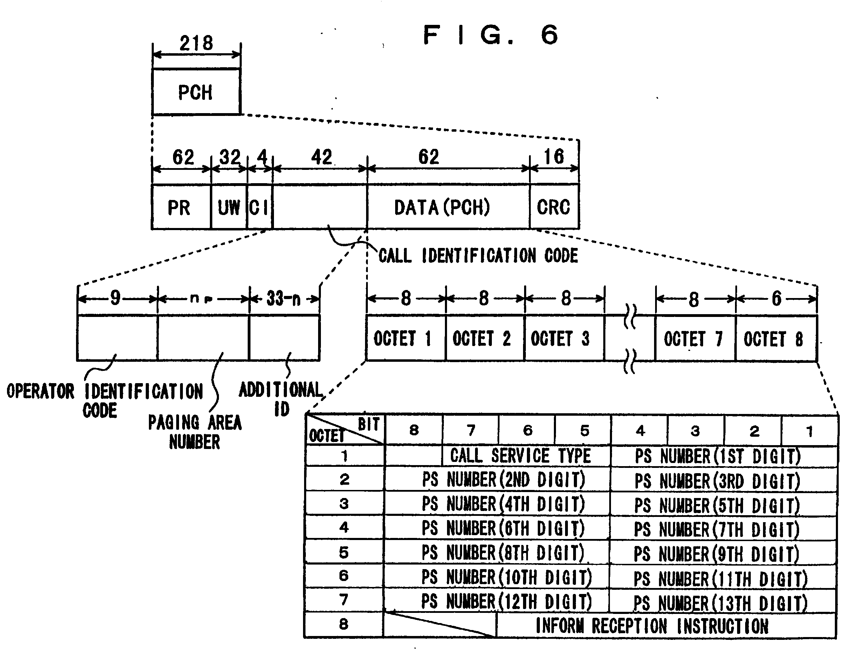

Fig. 6 shows a composition of a PCH. PCH is composed of preamble pattern (PR), synchronization word (UW), channel type code (CI), transmission identification code, data (PCH) and cyclic error detection signal (CRC). The transmission identification code is composed of operator identification code, paging area number and additional ID. Beside, data (PCH) is composed of octet 1 - octet 8.

In this case, As PCH defines only a single message, there is no message type indicating area. No calling, calling service by PS number of BCD 13 digits or less, calling service by PS number of hexadecimal 7 digits or other calling service types are indicated by 5 to 7 bit of the octet 1. And, octet 1 to 7 indicate the PS number. Moreover, the octet 8 designates reception of the reporting channel (BCCH). If a change occurs during intermittent reception mentioned below, PS receives BCCH by this reception designation.

Here, PS recognizes PCH to receive among a plurality of PCHs (PCH1 to PCHn) by reception group number. PS calculates the, by the formula (1), based on PS number and BCCH contents from CS. Here, $n_{PCH}$ is identical reception group number and $n_{GROUP}$ is reception group fraction factor. Besides, when two frequencies (2LCCH) are used and PCH reception groups are related each other, X = 2 and, otherwise, X = 1.

$$\text{Reception group number} = (\text{PS number}) \text{ MOD } (n_{PCH} \times n_{GROUP} \times X) + 1 \qquad (1)$$

As mentioned above, after the location registration, it returns to the reception state of the synchronized control channel and remains in stand-by state. During this stand-by state, the PHS (PS) 10 transits to the intermittent reception for receiving only PCH corresponding to the calculated reception group number. In this case, as PCH corresponding to the calculated reception group number exists for every LCCH super frame, conventionally in the stand-by state, the intermittent reception is executed for instance every 1.2 sec.

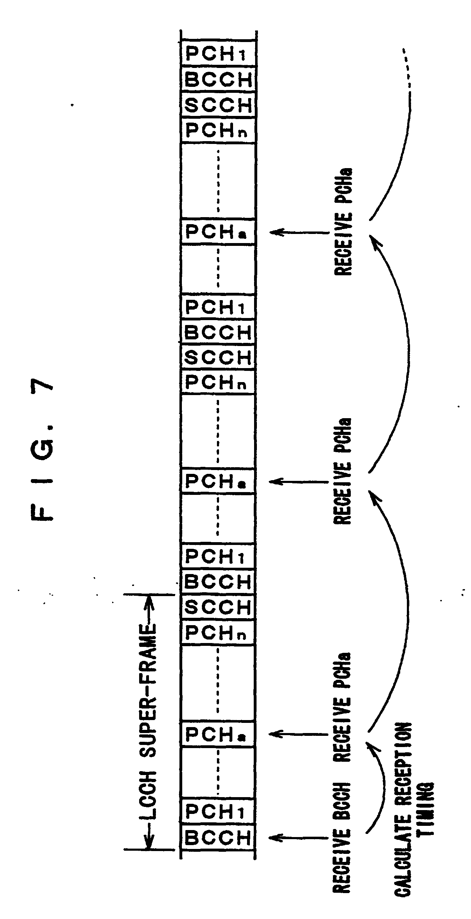

Fig. 7 shows PCH intermittent reception operation in stand-by state. Suppose PCH corresponding to own reception group number be PCHa. First of all, BCCH is received by continuous reception of control channel. Own reception group number is calculated from information in this BCCH, then the reception timing is calculated base on that reception group number for receiving PCHa. Thereafter, only PCHa is received intermittently with a constant reception timing.

Now, the operation for executing the communication will be described. In this case, for instance, if the interlocutor's telephone number is composed by key operation of the operation section 115, or the telephone directory data is retrieved before operating the communication key is operated, then the call processing will be performed. In other words, control data such as telephone number or the like is delivered from the control section 101 to the TDMA processing section 105, and sent to the base station through the control channel. This establishes the line connection with the interlocutor, allowing the communication.

Here, the communication is performed through the communication channel and, during the line connection processing, the communication channel communication frequency and slot position data is transmitted as control data from the base station using the control channel and delivered to the control section 101 by the TDMA processing section 105. The control section 101 controls the radio section 103 base on communication frequency data to make transmission/reception frequency with the communication channel's communication frequency and, at the same time, sets the slot to be selected by the TDMA processing section 105 based on slot position data. Therefore, the communication will be performed using the communication channel noticed by the base station.

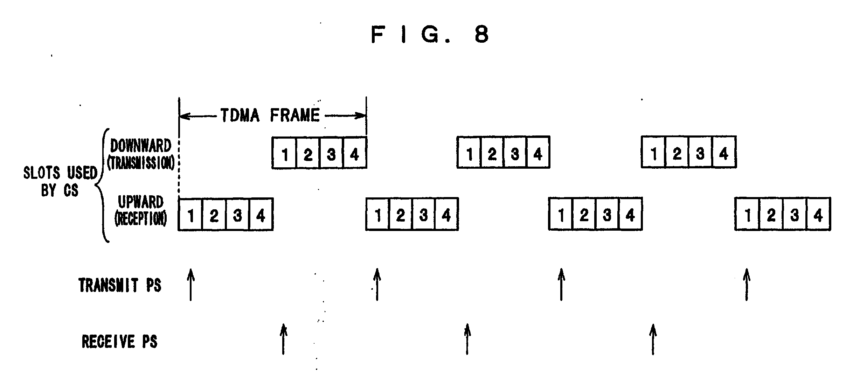

Fig. 8 shows a composition of a communication physical slot during communication. As for the slot used by the base station (CS), a TDMA frame of 5[ms] is composed of downward (transmission) 4 slots and following upward (reception) 4 slots. In respective TDMA frame, PS transmits data to CS by upward set slot and makes data of downward set slot reception data.

On the other hand, when calling data is transmitted as control data from the base station using the control channel, this calling data is delivered to the control section 101 by the TDMA processing section 105 and the reception is detected, the control section 101 controls the calling sound output section 118 to emit the calling sound.

When this calling operation is going on, if the communication key is operated and there is a response, response data is deliver from the control section 101 to the TDMA processing section 105 as control data, and transmitted to the base station through the control channel. This establishes the line connection with the interlocutor, allowing the communication. In this case also, the communication is performed through the communication channel noticed by the base station.

In the communication state, compressed sound data transmitted through the communication channel is output from the TDMA processing section 105. This compressed sound data is delivered to the sound codec section 106 to demodulate and then convert into analog signal. Then, reception sound signal output from the sound codec section 106 is delivered to the speaker 108 through an amplifier 107, and this speaker 108 emits sound by the reception sound signal.

Beside, transmission sound signal output from the microphone 111 is amplified by the amplifier 111, deliver to the sound codec section 106, converted into digital signal, and then compression encoded to form compressed sound data. Then, the compressed sound data output from to the sound codec section 106 is delivered to the TDMA processing section 105, and transmitted to the interlocutor side through the communication channel.

Next, the service center 13 will be described. Tough not shown in the drawing, this service center 13 comprises a memory means wherein a plurality of combinations of base station identification information group (CS-ID group) and corresponding positional information thereof, and an information processing means for comparing the base station identification information group sent from the terminal 12 and respective base station identification information group of the plurality of combinations stored in the memory means, and obtaining positional information composing said combination wherein the number of agreement of base station identification information is maximum.

Now, the operation of the communication system 10 shown in Fig. 1 will be described briefly. When an operation to search for positional information of the searched side terminal 12 is executed on the operation section 115 of the searching side terminal 11, the telephone number S11 of the terminal 12 is sent from the terminal 11 to the service center 13, and this service center 13 transmits base station identification information group request signal S12 to the terminal 12. In response to this request signal S12, the terminal 12 transmits the base station identification information group S13 to the service center 13. This base station identification information group S13 is composed of base station identification information concerning control channels whose receive signal strength indicate is comprised within a predetermined number of higher ranks among base station identification information obtained by search operation for sequentially receiving control channels of available public base stations of the terminal 12. Though not mentioned above, the operation to obtain the base station identification information group S13 is executed, for instance, every constant period, or when the base station identification information group request signal S12 is supplied.

In addition, the information processing means of the service center 13 compares the base station identification information group S13 sent from the terminal 12 and respective base station identification information group of the plurality of combinations stored in the memory means, and obtains positional information composing said combination wherein the number of agreement of base station identification information is maximum. This positional information S14, indicating the location of the terminal 12, is sent to the terminal 11 by the service center 13. Then the display section 116 (see Fig. 2) of the terminal 11 displays the location indicated by that positional information S14, namely the location of the searched side terminal 12.

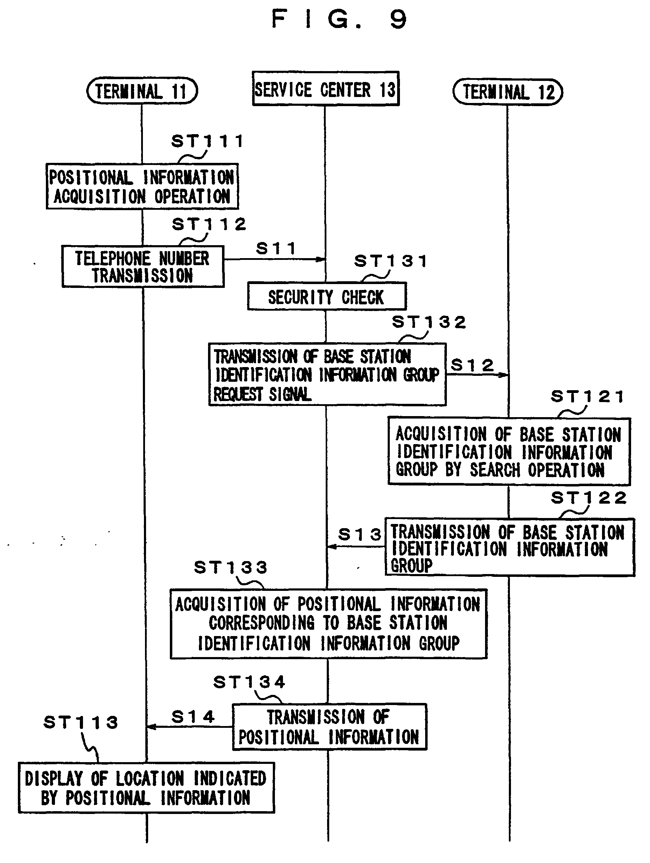

Next, the operation of the communication system 10 shown in Fig. 1 will be described more in detail referring to Fig. 9 showing the control sequence diagram. When an operation to obtain the terminal 12 position information is executed in the step ST111, the terminal 11 sends the telephone number S11 of the terminal 12 to the service center 13 in the step ST112. This telephone number S11 is transmitted by, for example, DTMF signal.

Upon the reception of the telephone number S11 of the terminal 12, the service center 13 performs security check in the step ST131. In other words, though not mentioned above, terminal devices allowed to transmit positional information are previously registered in the service center 13, and the service center 13 confirms if the terminal 11 is included in the registered ones. If the terminal 11 is not a terminal allowed to transmit positional information, the following operations will not be executed, and consequently, the service center 13 does not transmit the positional information S14 of the terminal 12 to the terminal 11.

If the terminal 11 is a terminal allowed to transmit positional information, in the step ST132, the service center 13 transmits the base station identification information group request signal S12 to the terminal 12, using the terminal 12 telephone number sent from the terminal 11. This request signal S12 is transmitted by, for example, DTMF signal. Upon the reception of the base station identification information group request signal S12, in the step ST121, the terminal 12 executes search operation and obtains the base station identification information group (CS-ID group). Namely, the terminal 12 sequentially receives control channels of available public base stations, and recognizes CS-ID concerning control channels whose receive signal strength indicate is comprised within a predetermined number of higher ranks as base station identification information group S13.

Here, the terminal 12 may execute this search operation for obtaining base station identification information group periodically, store base station identification information groups obtained each time in a RAM 120 or the like, and obtain the base station identification information group S13 read out of the RAM 120 or the like without performing search operation in the step ST121.

Upon the acquisition of the base station identification information group S13 in the step ST121, the terminal 12 transmits this base station identification information group S13 to the service center 13. This base station identification information group S13 is transmitted by, for example, DTMF signal.

Upon the reception of the base station identification information group S13, in the step ST133, the service center 13 obtain the positional information S14 corresponding to that base station identification information group S13. In this case, the service center 13 compares the base station identification information group S13 and respective base station identification information group (CS-ID group) of the plurality of combinations stored in the aforementioned memory means of the service center 13, and obtains positional information composing said combination wherein the number of agreement of base station identification information is maximum. This positional information S14, indicating the location of the terminal 12, is sent to the terminal 11 by the service center 13 in the step ST134. This positional information S14 is transmitted by, for example, DTMF signal.

Upon the reception of the positional information S14 of the terminal 12, in the step ST113, the terminal 11 displays the location indicated by that positional information S14 on the display 116. This allows the carrier of the terminal 11 to confirm the location of the terminal 12 at any position.

Though, in the control sequence diagram of Fig. 9, the service center 13 performs security check in the step ST13, it may also be performed after the terminal 12 has received the base station identification information group request signal S12 from the service center 13. In this case, terminal devices allowed to transmit positional information are previously registered in the terminal 12, and the terminal 12 confirms if the terminal 11 is included in the registered ones. If the terminal 11 is not a terminal allowed to transmit positional information, the following operations will not be executed, and consequently, the service center 13 does not transmit the positional information S14 of the terminal 12 to the terminal 11.

As mentioned above, in the first embodiment, the service center 13 comprises a memory means for storing combinations of base station identification information group (CS-ID group)and corresponding positional information thereof, and the service center 13 performs the operation to acquire the positional information S14 of the terminal 12, and transmits that positional information S14 to the terminal 11. This allows the terminal 11 to obtain easily the positional information S14 of the terminal 12 at any position, without providing the terminals A and B with a large capacity memory means, and the carrier of the terminal 11 to confirm the location of the terminal 12.

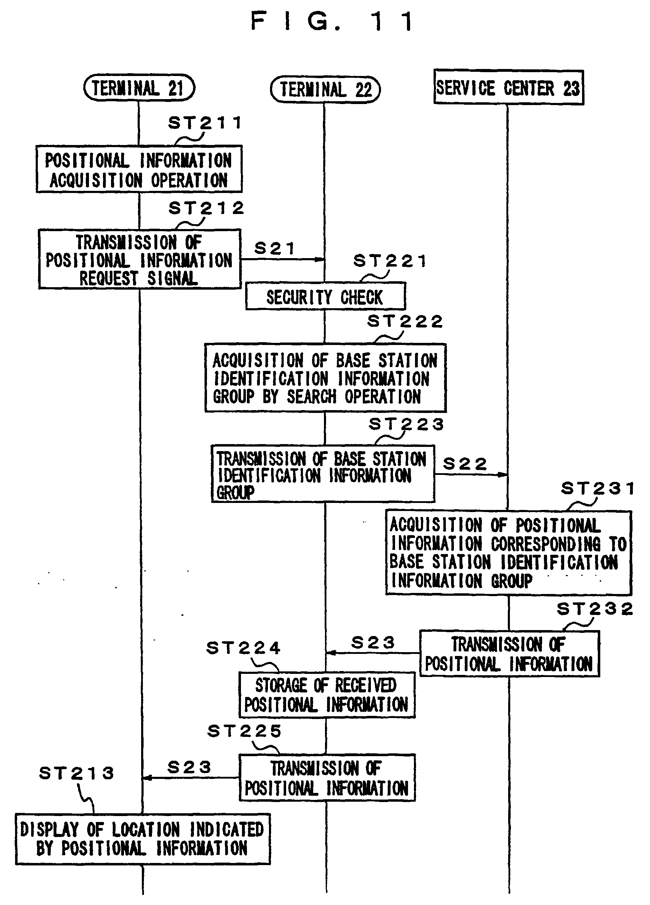

Next, Fig. 10 shows outline composition of a communication system according to a second embodiment. This communication system 20 comprises a terminal 21 (terminal A), a terminal 22 (terminal B) and a service center 23. The terminal 21 and the service center 23 can be connected to the terminal 22 via respectively a line not shown in the drawing. Also as terminal 21 and terminal 22, the PHS 100 shown in Fig. 2 is used. Besides, as the service center 13 shown in Fig. 1, the service center 23 comprises a memory means for storing combinations of base station identification information group (CS-ID group) and corresponding positional information thereof, and an information processing means for comparing the base station identification information group sent from the terminal 22 and respective base station identification information group of the plurality of combinations stored in the memory means, and obtaining positional information composing said combination wherein the number of agreement of base station identification information is maximum.

Now, the operation of the communication system 20 shown in Fig. 10 will be described briefly. When an operation to search for positional information of the searched side terminal 22 is executed on the operation section 115 of the searching side terminal 21, positional information request signal S21 is sent from the terminal 21 to the terminal 22, and in response to this request signal S21, the terminal 22 transmits base station identification information group S22 to the service center 13. This base station identification information group S22 is composed of base station identification information concerning control channels whose receive signal strength indicate is comprised within a predetermined number of higher ranks among base station identification information obtained by search operation for sequentially receiving control channels of available public base stations of the terminal 22. The operation to obtain the base station identification information group S22 is executed, for instance, periodically, or when the base station identification information group request signal S21 is supplied.

In addition, the information processing means of the service center 23 compares the base station identification information group S22 sent from the terminal 22 and respective base station identification information group of the plurality of combinations stored in the memory means, and obtains positional information composing said combination wherein the number of agreement of base station identification information is maximum. This positional information S23, indicating the location of the terminal 22, is sent to the terminal 21 by the service center 23 via the terminal 22. Then the display section 116 (see Fig. 2) of the terminal 21 displays the location indicated by that positional information S23, namely the location of the searched side terminal 22.

Next, the operation of the communication system 20 shown in Fig. 10 will be described more in detail referring to Fig. 11 showing the control sequence diagram. When an operation to obtain the terminal 22 position information is executed in the step ST211, the terminal 21 sends positional information request signal S21 to the terminal 22 the step ST212. This request signal S21 is transmitted by, for example, DTMF signal.

Upon the reception of the positional information request signal S21, the terminal 22 performs security check in the step ST221. In other words, though not mentioned above, terminal devices allowed to transmit positional information are previously registered in the terminal 22, and the terminal 22 confirms if the terminal 21 is included in the registered ones. If the terminal 21 is not a terminal allowed to transmit positional information, the following operations will not be executed, and consequently, the terminal 22 does not transmit the positional information S23 of the terminal 22 to the terminal 21.

If the terminal 21 is a terminal allowed to transmit positional information, in the step ST222, the terminal 22 executes search operation and obtains the base station identification information group (CS-ID group). Namely, the terminal 22 sequentially receives control channels of available public base stations, and recognizes CS-ID concerning control channels whose receive signal strength indicate is comprised within a predetermined number of higher ranks as base station identification information group S22. And, the terminal 22 transmits this base station identification information group S22 to the service center 23 in the step ST223. This identification information signal S22 is transmitted by, for example, DTMF signal.

Here, the terminal 22 may execute this search operation for obtaining base station identification information group periodically, store base station identification information groups obtained each time in a RAM 120 or the like, and obtain the base station identification information group S22 read out of the RAM 120 or the like without performing search operation in the step ST222.

Upon the reception of the base station identification information group S22, in the step ST231, the service center 23 obtains positional information S23 corresponding to this base station identification information group S22. In this case, it compares the base station identification information group S22 and respective base station identification information group (CS-ID group) of the plurality of combinations stored in the aforementioned memory means of the service center 23, and obtains positional information composing said combination wherein the number of agreement of base station identification information is maximum. This positional information S23, indicating the location of the terminal 22, is sent to the terminal 22 by the service center 23 in the step ST232. This positional information S23 is transmitted by, for example, DTMF signal.

Upon the reception of the positional information S23 of the terminal 22, in the step ST224, the terminal 22 stores that positional information S23 in the RAM 120 or the like and transmits the positional information S23 to the terminal 21, in the step ST225. This positional information S23 is transmitted by, for example, DTMF signal. Upon the reception of the positional information S23 of the terminal 22, in the step ST213, the terminal 21 displays the location indicated by that positional information S23 on the display section 116. This allows the carrier of the terminal 21 to confirm the location of the terminal 22 at any position.

As mentioned above, in the second embodiment, the service center 23 comprises a memory means for storing combinations of base station identification information group (CS-ID group) and corresponding positional information thereof, and the service center 23 performs the operation to acquire the positional information S23 of the terminal 22, and transmits that positional information S23 to the terminal 21 via the terminal 22. This allows the terminal 21 to obtain easily the positional information S23 of the terminal 22 at any position, without providing the terminals 21 and 22 with a large capacity memory means.

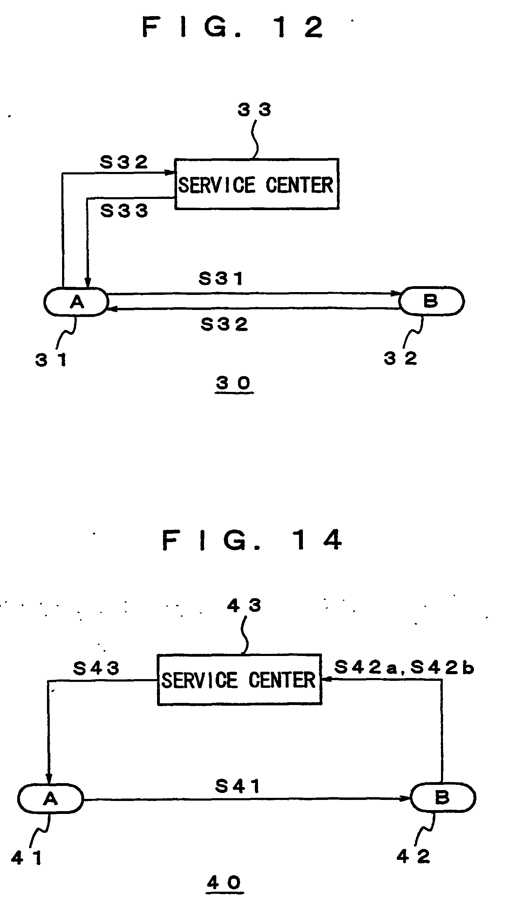

Next, Fig. 12 shows outline composition of a communication system 30 according to a third embodiment. This communication system 30 comprises a terminal 31 (terminal A), a terminal 32 (terminal B) and a service center 33. The terminal 32 and the service center 33 can be connected to the terminal 31 respectively via a line not shown in the drawing. Also as terminal 31 and terminal 32, the PHS 100 shown in Fig. 2 is used. Besides, as the service center 13 shown in Fig. 1, the service center 33 comprises a memory means for storing combinations of base station identification information group (CS-ID group) and corresponding positional information thereof, and an information processing means for comparing the base station identification information group sent from the terminal 32 via the terminal 31 and respective base station identification information group of the plurality of combinations stored in the memory means, and obtaining positional information composing said combination wherein the number of agreement of base station identification information is maximum.

Now, the operation of the communication system 30 shown in Fig. 12 will be described briefly. When an operation to search for positional information of the searched side terminal 32 is executed on the operation section 115 of the searching side terminal 31, base station identification information group request signal S31 is sent from the terminal 31 to the terminal 32, and in response to this request signal S31, the terminal 32 transmits the base station identification information group S32 to the service center 33 via the terminal 31. This base station identification information group S32 is composed of base station identification information concerning control channels whose receive signal strength indicate is comprised within a predetermined number of higher ranks among base station identification information obtained by search operation for sequentially receiving control channels of available public base stations of the terminal 32. The operation to obtain the base station identification information group S32 is executed, for instance periodically, or when the base station identification information group request signal S31 is supplied.

In addition, the information processing means of the service center 33 compares the base station identification information group S32 and respective base station identification information group of the plurality of combinations stored in the memory means, and obtains positional information composing said combination wherein the number of agreement of base station identification information is maximum. This positional information S33, indicating the location of the terminal 32, is sent to the terminal 31. Then the display section 116 (see Fig. 2) of the terminal 31 displays the location indicated by that positional information S33, namely the location of the searched side terminal 32.

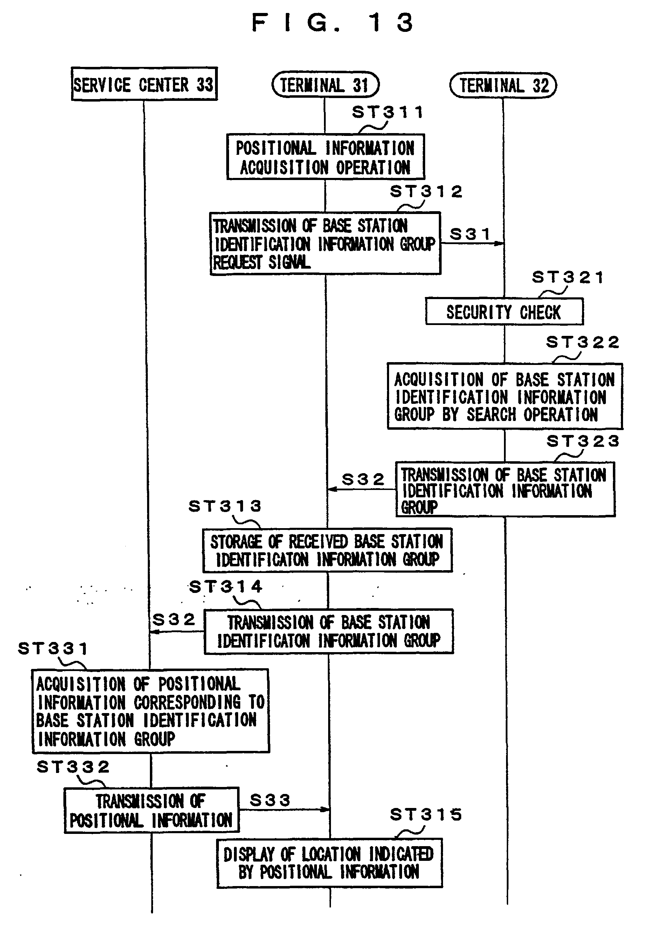

Next, the operation of the communication system 30 shown in Fig. 12 will be described more in detail referring to Fig. 13 showing the control sequence diagram. When an operation to obtain the terminal 32 position information is executed in the step ST311, the terminal 31 sends the base station identification information group request signal S31 to the terminal 32 in the step ST312. This request signal S31 is transmitted by, for example, DTMF signal.

Upon the reception of the request signal S31, the terminal 32 performs security check in the step ST321. In other words, terminal devices allowed to transmit positional information are previously registered in the terminal 32, and the terminal 32 confirms if the terminal 31 is included in the registered ones. If the terminal 31 is not a terminal allowed to transmit positional information, the following operations will not be executed, and consequently, the service center 33 does not transmit the positional information S33 of the terminal 32 to the terminal 31.

If the terminal 31 is a terminal allowed to transmit positional information, in the step ST322, the terminal 32 executes short tracking and obtains the base station identification information group (CS-ID group) S32. Namely, the terminal 32 sequentially receives control channels of available public base stations, and recognizes CS-ID concerning control channels whose receive signal strength indicate is comprised within a predetermined number of higher ranks as base station identification information group S32. Then, in the step ST323, the terminal 32 transmits that base station identification information group S32 to the terminal 31. This that base station identification information group S32 is transmitted by, for example, DTMF signal.

Here, the terminal 32 may execute this search operation for obtaining base station identification information group periodically, store base station identification information groups obtained each time in a RAM 120 or the like, and obtain the base station identification information group S32 read out of the RAM 120 or the like without performing search operation in the step ST322.

Upon the reception of the base station identification information group S32, in the step ST313, the terminal 31 stores that base station identification information group S32 in the RAM 120 or the like, and transmits that base station identification information group S32 to the service center 33 in the step ST314. This base station identification information group S32 is transmitted by, for example, DTMF signal.

Upon the reception of the base station identification information group S32, in the step ST331, the service center 13 obtains the positional information S33 corresponding to that base station identification information group S32. In this case, it compares the base station identification information group S32 and respective base station identification information group (CS-ID group) of the plurality of combinations stored in the aforementioned memory means of the service center 33, and obtains positional information composing said combination wherein the number of agreement of base station identification information is maximum. This positional information S33, indicating the location of the terminal 32, is sent to the terminal 31 by the service center 33 in the step ST332. This positional information S33 is transmitted by, for example, DTMF signal.

Upon the reception of the positional information of the terminal 32, in the step ST315, the terminal 31 displays the location indicated by that positional information S33 on the display section 116. This allows the carrier of the terminal 31 to confirm the location of the terminal 32 at any position.

As mentioned above, in the third embodiment, the service center 33 comprises a memory means for storing combinations of base station identification information group (CS-ID group)and corresponding positional information thereof, and the service center 33 performs the operation to acquire the positional information S33 of the terminal 32, and transmits that positional information S33 to the terminal 31. This allows the terminal 31 to obtain easily the positional information S33 of the terminal 32 without providing the terminal 31 or the terminal 32 with a large capacity memory means, and the carrier of the terminal 31 to confirm the location of the terminal 32.

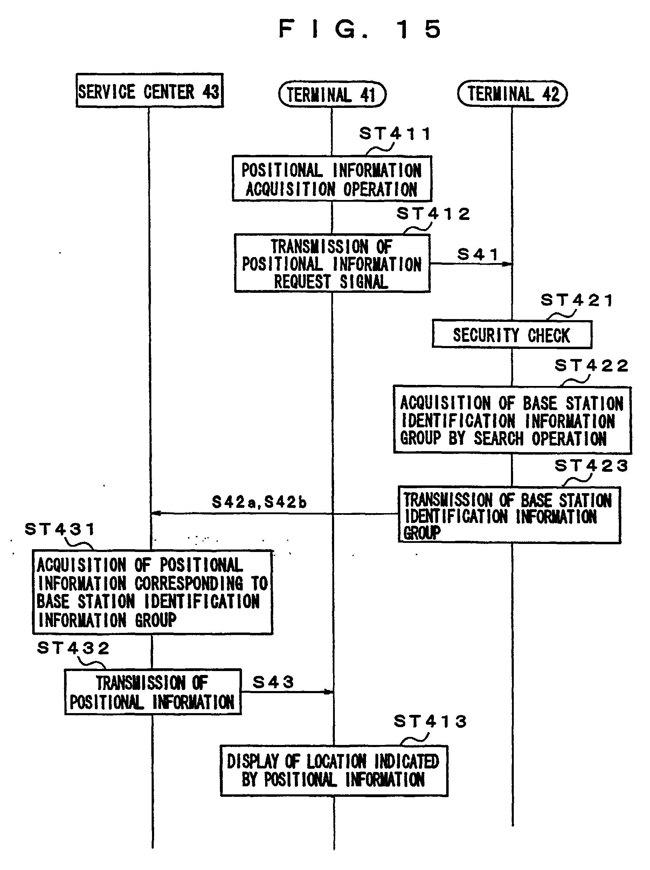

Next, Fig. 14 shows outline composition of a communication system 40 according to a third embodiment. This communication system 40 comprises a terminal 41 (terminal A), a terminal 42 (terminal B) and a service center 43. The terminal 41 and the terminal 42, the terminal 42 and the service center 43, and the service center 43 and the terminal 41 are connected respectively via a line not shown in the drawing. Also as terminal 41 and terminal 42, the PHS 100 shown in Fig. 2 is used. Besides, as the service center 13 shown in Fig. 1, the service center 43 comprises a memory means for storing combinations of base station identification information group (CS-ID group) and corresponding positional information thereof, and an information processing means for comparing the base station identification information group sent from the terminal 42 via the terminal 41 and respective base station identification information group of the plurality of combinations stored in the memory means, and obtaining positional information composing said combination wherein the number of agreement of base station identification information is maximum.

Now, the operation of the communication system 40 shown in Fig. 14 will be described briefly. When an operation to search for positional information of the searched side terminal 42 is executed on the operation section 115 of the searching side terminal 41, base station identification information group request signal S41 is sent from the terminal 41 to the terminal 42, and in response to this request signal S41, the terminal 42 transmits the base station identification information group S42a and the telephone number S42b of the terminal 41 to the service center 43. This base station identification information group S42a is composed of base station identification information concerning control channels whose receive signal strength indicate is comprised within a predetermined number of higher ranks among base station identification information obtained by search operation for sequentially receiving control channels of available public base stations of the terminal 42. The operation to obtain the base station identification information group S42a is executed, for instance periodically, or when the base station identification information group request signal S41 is supplied.

In addition, the information processing means of the service center 43 compares the base station identification information group S42a and respective base station identification information group of the plurality of combinations stored in the memory means, and obtains positional information composing said combination wherein the number of agreement of base station identification information is maximum. This positional information S43, indicating the location of the terminal 42, is sent to the terminal 41, using the telephone number S42b of the terminal 41. Then the display section 116 (see Fig. 2) of the terminal 41 displays the location indicated by that positional information S43, namely the location of the searched_side terminal 42.

Next, the operation of the communication system 40 shown in Fig. 14 will be described more in detail referring to Fig. 14 showing the control sequence diagram. When an operation to obtain the terminal 42 position information is executed in the step ST411, the terminal 41 sends the base station identification information group request signal S41 to the terminal 42 in the step ST412. This request signal S41 is transmitted by, for example, DTMF signal.

Upon the reception of the request signal S41, the terminal 42 performs security check in the step ST421. In other words, tough not mentioned above, terminal devices allowed to transmit positional information are previously registered in the terminal 42, and the terminal 42 confirms if the terminal 41 is included in the registered ones. If the terminal 41 is not a terminal allowed to transmit positional information, the following operations will not be executed, and consequently, the service center 43 does not transmit the positional information S43 of the terminal 42 to the terminal 41.

If the terminal 41 is a terminal allowed to transmit positional information, in the step ST422, the terminal 42 executes search operation and obtains the base station identification information group (CS-ID group) S42a. Namely, the terminal 42 sequentially receives control channels of available public base stations, and recognizes CS-ID concerning control channels whose receive signal strength indicate is comprised within a predetermined number of higher ranks as base station identification information group S42a. Then, in the step ST423, the terminal 42 transmits that base station identification information group S42a and the telephone number S42b of the terminal 41 to the service center 43. These base station identification information group S42a and telephone number S42b of the terminal 41 are transmitted by, for example, DTMF signal. The telephone number S42b is used, as mentioned below, to allow the service station 43 call the terminal 41, when the service center transmits the positional information S43 to the terminal 41.

Here, the terminal 42 may execute this search operation for obtaining base station identification information group periodically, store base station identification information groups obtained each time in a RAM 120 or the like, and obtain the base station identification information group S42a read out of the RAM 120 or the like without performing search operation in the step ST422.

Upon the reception of the base station identification information group S42a, in the step ST431, the service center 14 obtains the positional information S43 corresponding to that base station identification information group S42a. In this case, it compares the base station identification information group S42a and respective base station identification information group (CS-ID group) of the plurality of combinations stored in the aforementioned memory means of the service center 43, and obtains positional information composing said combination wherein the number of agreement of base station identification information is maximum. This positional information S43, indicating the location of the terminal 42, is sent to the terminal 41 by the service center 43 in the step ST432. This positional information S43 is transmitted by, for example, DTMF signal.

Upon the reception of the positional information S43 of the terminal 42, in the step ST413, the terminal 41 displays the location indicated by that positional information S43 on the display section 116. This allows the carrier of the terminal 41 to confirm the location of the terminal 42 at any position.

As mentioned above, in the fourth embodiment, the service center 43 comprises a memory means for storing combinations of base station identification information group (CS-ID group) and corresponding positional information thereof, and the service center 43 performs the operation to acquire the positional information S43 of the terminal 42, and transmits that positional information S43 to the terminal 41. This allows the terminal 41 to obtain easily the positional information S43 of the terminal 42 without providing the terminal 41 and the terminal 42 with a large capacity memory means, and the carrier of the terminal 41 to confirm the location of the terminal 42.

In the aforementioned embodiments, though service centers 13 - 43 send terminal 12 - 42 positional information as it is to terminals 11 - 41, character string data may be sent by adding data indicating its accuracy, according to the number of agreement of CS-ID. This allows the terminals 11 - 41 to confirm the accuracy of the location indicated by the positional information. Precision indication data may include, for instance, "near ...", "proximity of ..." or other character string data, when the number of agreement is low.

Also, in the aforementioned embodiments, service centers 13 - 43 compare simply the base station identification information group (CS-ID group) sent from the searched side terminals 12 - 42 and respective base station identification information group (CS-ID group) of a plurality of combinations stored in the memory means, and obtains the number of agreement in respective one of the plurality of combinations.

However, respective base station identification information group (CS-ID group) of a plurality of combinations stored in the memory means and base station identification information group sent from the terminals 12 - 42 may be divided into a plurality of groups based on RSSI, and the base station identification information group sent from the terminals 12 - 42 and respective base station identification information group of the plurality of combinations stored in the memory means compared for each group to obtain the number of agreement in respective one of the plurality of combinations. In this case, obviously, the terminals 12 - 42 sends base station identification information group with RSSI data to the service centers 13 - 43. Thus, more accurate positional information ca be obtained, by comparing for each group and determining the number of agreement.

Besides, in the aforementioned embodiments, the base station identification information group (CS-ID group) obtained by the searched side terminals 12 - 42 is sent to the service centers 13 - 43, the service centers 13 - 43 compare that base station identification information group (CS-ID group) and respective base station identification information group (CS-ID group) of a plurality of combinations stored in the memory means, examine the number of CS-ID agreement in respective one of the plurality of combinations, and obtain positional information composing said combination wherein the number of agreement of base station identification information is maximum, as positional information indicating the location of the searched side terminal 12 to 42.

However, in place of this composition, base station identification information group (CS-ID group) obtained by the searched side terminals 12 - 42 may be sent to the service centers 13 - 43 with RSSI data of the time when respective base station identification information composing that base station identification information group is obtained, and the service centers 13 - 43 calculate the positional information indicating the location of the searched side terminal 12 - 42 based on these information.

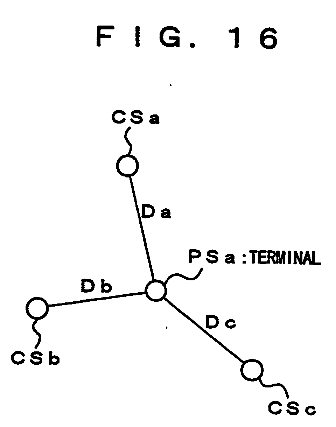

For instance, as shown in Fig. 16, when CS-ID of base stations CSa, CSb and CSc can be obtained by a searched side terminal Psa, CS-ID group concerning these base stations CSa, CSb and CSc is sent with the RSSI data to the service center. The service center recognizes the output level of base stations CSa, CSb and CSc from the CS-ID group, and computes the distance Da, Db and Dc between the terminal PSa and the base stations CSa, CSb and CSc from the output level and RSSI data. Moreover, the service center knows the location of the base stations CSa, CSb and CSc from CS-ID group, and computes the positional information indicating the location of the searched side terminal Psa, using this location and the aforementioned distance Da, Db and Dc.

In addition, when base station identification information group is sent to the service center with RSSI data as mentioned above, to compute the positional information indicating the location of the searched side terminal, further, the service center may be informed of data to know the radio reception performance of the searched side terminal. This allows the service center to compute more accurate information by knowing the radio reception performance of the searched side terminal.

Besides, in the aforementioned embodiments, positional information obtain by the service centers 13 - 43 is sent to the searching side terminal 11 - 41, and the location of the searched side terminal 12 - 42 is indicated on the display section of this terminal 11 - 41 by means of, for instance, characters; however, the service center may well send positional data to the searching side terminal with data type designated by that terminal. For example, data types include character data, sound data, image data, longitude/latitude data, or the like. For instance, when the searched side terminal is a PHS as in the aforementioned embodiment, the positional information is sent by character data, sound data, or the like. And, when the searched side terminal is a facsimile machine, the positional information is sent by facsimile signal (image data). Further, when the searched side terminal is a personal computer, navigation system, the positional information is sent by image data (JPEG data or the like), longitude/latitude data, or the like.

Besides, in the aforementioned embodiments, it has been described that information is transmitted between searching side terminal 11 - 41, searched side terminal 12 - 42 and service center 13 - 43 by, for instance, DTMF signal, it may also be transmitted by disposing that information in the call setting message's subaddress area, or using PHS standard data communication (PIAFS).

Though, in the aforementioned embodiments, it has been described that the communication terminal device is a PHS, it is evident obvious that the present invention applies similarly to the case where the communication terminal device is a communication device other than PHS.

According to the present invention, base station identification information group or base station identification information group and receive signal strength indicate data obtained by a second communication terminal device (searched side terminal) are sent to a service center, the second communication terminal device positional information is obtained by this service center, and this positional information is sent the first communication terminal device (searching side terminal). Therefore, positional information indicating the location of the second communication terminal device at any position can be obtained easily by means of the first communication terminal device, without providing the first and the second communication terminal devices with a large capacity memory means, allowing to avoid a considerable cost increase of the communication terminal device.

**INDUSTRIAL APPLICATION**

As mentioned hereinabove, the communication terminal device according to the present invention is preferably applied to PHS, cellular phone or similar communication terminal devices.

**Claims**

1.   A communication terminal device, comprising:

a transmission means for sending said telephone number of other communication terminal device whose positional information is to be obtained to a service center;
a reception means for receiving positional information of said other communication terminal device transmitted by said service center; and
a reporting means for reporting said location indicated by said positional information received by this reception means.

2.   A communication terminal device, comprising:

an information acquisition means for acquiring transmission information necessary to obtain positional information indicating its own location from a service center;
a reception means for receiving request signal of transmission information sent by said service center; and
a transmission means for sending to said service center said transmission information obtained by said information acquisition means, when this reception means receives said request signal of transmission information.

3.   The communication terminal device of claim 2, wherein:

said transmission information is base station identification information group composed of base station identification information concerning control channels whose receive signal strength indicate is comprised within a predetermined number of higher ranks among base station identification information obtained by sequentially receiving control channels of available public base stations.

4.   The communication terminal device of claim 2, wherein:

said transmission information is base station identification information group composed of base station identification information concerning control channels whose receive signal strength indicate is comprised within a predetermined number of higher ranks among base station identification information obtained by sequentially receiving control channels of available public base stations, and receive signal strength indicate data of said time when respective base station identification information composing this base station identification information group is obtained.

5.   The communication terminal device of claim 2, wherein:

said operation to obtain transmission information is executed periodically by said information acquisition means.

6.   The communication terminal device of claim 2, wherein:

said operation to obtain transmission information is executed by said information acquisition means, when said reception means receives said request signal of transmission information.

7.   A communication system, comprising:

a first communication terminal device, a second communication terminal device, and a service center, wherein:

said first communication terminal device comprises:

a first transmission means for sending said telephone number of said second communication terminal device to said service center;

a first reception means for receiving positional information of said second communication terminal device transmitted by said service center; and

a reporting means for reporting said location indicated by said positional information received by said first reception means, said second communication terminal device comprises:

an information acquisition means for acquiring transmission information necessary to obtain positional information indicating its own location from said service center;

a second reception means for receiving request signal of transmission information sent by said service center;

a second transmission means for sending transmission information obtained by said information acquisition means to said service center, when said second reception means receives said request signal of transmission information, and

said service center, comprises:

a third reception means for receiving said second communication terminal device telephone number sent from said first communication terminal device;

a third transmission means for sending transmission information request signal to said second communication terminal device based on said second communication terminal device telephone number received by said third reception means;

a fourth reception means for receiving transmission information sent from said second communication terminal device;

an information processing means for obtaining positional information indicating said location of said second communication terminal device based on transmission information received by this fourth reception means; and

a fourth transmission means for sending said positional information obtained by said information processing means to said first communication terminal device.

8. The communication system of claim 7, wherein:

said transmission information obtained by the information acquisition means of said second communication terminal device is a base station identification information group composed of base station identification information concerning control channels whose receive signal strength indicate is comprised within a predetermined number of higher ranks among base station identification information obtained by sequentially receiving control channels of available public base stations;

said service center comprises a memory means storing a plurality of combinations of base station identification information group and corresponding positional information thereof; and

said information processing means of said service center compares the base station identification information group as transmission information received by said fourth reception means and respective base station identification information group of the plurality of combinations stored in said memory means, and obtains, as positional information indicating the location of said second communication terminal device, said positional information composing said combination wherein the number of agreement of base station identification information is maximum.

9. The communication system of claim 7, wherein:

said transmission information obtained by the information acquisition means of said second communication terminal device is a base station identification information group composed of base station identification information concerning control channels whose receive signal strength indicate is comprised within a predetermined number of higher ranks among base station identification information obtained by sequentially receiving control channels of available public base stations, and receive signal strength indicate data of said time when respective base station identification information composing this base station identification information group is obtained;

said service center comprises a memory means storing a plurality of combinations of base station identification information group and corresponding positional information thereof; and

said information processing means of said service center divides respective base station identification information group of the plurality of combinations stored in said memory means and base station identification information group received by said fourth reception means as said positional information into a plurality of groups based on said receive signal strength indicating data, compares the base station identification information group received by said fourth reception means and respective base station identification information group of the plurality of combinations stored in said memory means for each group, and obtains said positional information composing said combination where the number of agreement of base station identification information group is maximum as positional information indicating the location of said second communication terminal device.

**10.** The communication system of claim 7, wherein:

said transmission information obtained by the information acquisition means of said second communication terminal device is a base station identification information group composed of base station identification information concerning control channels whose receive signal strength indicate is comprised within a predetermined number of higher ranks among base station identification information obtained by sequentially receiving control channels of available public base stations, and receive signal strength indicate data of said time when respective base station identification information composing this base station identification information group is obtained;
said information processing means of said service center obtains by operations the positional information indicating the location of said second communication terminal device using the base station identification information group received as said transmission information by said fourth reception means and said receive signal strength indicating data.

**11.** The communication system of claim 7, wherein:

said service center further comprises a terminal confirmation means for confirming if said first communication terminal device is a terminal device allowed to transmit positional information; and
if said terminal confirmation means confirms that said first communication terminal device is not a terminal allowed to transmit positional information, said fourth transmission means does not transmit said positional information to said first communication terminal device.

**12.** The communication system of claim 7, wherein:

said second communication terminal device further comprises a terminal confirmation means for confirming if said first communication terminal device is a terminal device allowed to transmit positional information; and
if said terminal confirmation means confirms that said first communication terminal device is not a terminal allowed to transmit positional information, said second transmission means does not transmit said positional information to said service center.

**13.** The communication system of claim 8 or 9, wherein:

said fourth transmission means of said service center transmits said positional information to said first communication terminal device by adding accuracy data of that positional data, according to said number of agreement.

**14.** A communication terminal device, comprising:

a transmission means for sending positional information request signal to other communication terminal device;
a reception means for receiving positional information indicating the location of said other communication terminal device sent by said other communication terminal device; and
a reporting means for reporting the location indicated by the positional information received by said reception means.

**15.** A communication terminal device, comprising:

an information acquisition means for obtaining transmission information necessary to obtain positional information indicating its own location from a service center;
a first reception means for receiving positional information request signal sent by said other communication terminal device;

a first transmission means for sending said transmission information obtained by said information acquisition means to said service center when said first reception means receives said positional information request signal;

a second reception means for receiving positional information indicating its own location sent from said service center; and

a second transmission means for sending said positional information received by said second reception means to said other communication terminal device.

**16.** The communication system of claim 15, wherein:

said transmission information is base station identification information group composed of base station identification information concerning control channels whose receive signal strength indicate is comprised within a predetermined number of higher ranks among base station identification information obtained by sequentially receiving control channels of available public base stations.

**17.** The communication terminal device of claim 15, wherein:

said transmission information is base station identification information group composed of base station identification information concerning control channels whose receive signal strength indicate is comprised within a predetermined number of higher ranks among base station identification information obtained by sequentially receiving control channels of available public base stations, and receive signal strength indicate data of said time when respective base station identification information composing this base station identification information group is obtained.

**18.** The communication terminal device of claim 15, wherein:

said operation to obtain transmission information is executed periodically by said information acquisition means.

**19.** The communication terminal device of claim 15, wherein:

said operation to obtain transmission information is executed, when said reception means receives said request signal of transmission information.

**20.** A communication system, comprising:

a first communication terminal device, a second communication terminal device, and a service center, wherein: said first communication terminal device comprises:

a first transmission means for sending positional information request signal to said second communication terminal device;

a first reception means for receiving positional information of said second communication terminal device transmitted by said second communication terminal device; and

a reporting means for reporting the location indicated by said positional information received by said first reception means,

said second communication terminal device comprises:

an information acquisition means for acquiring transmission information necessary to obtain positional information indicating its own location from the service center;

a second reception means for receiving said positional information request signal sent from said first communication terminal device;

a second transmission means for sending transmission information obtained by said information acquisition means to said service center, when said second reception means receives said request signal of transmission information;

a third reception means for receiving positional information indicating its own location sent from said service center; and

a third transmission means for sending said positional information received by said third reception means to said first communication terminal device; and

said service center, comprises:

a fourth reception means for receiving said transmission information sent from said second communication terminal device;

an information processing means for obtaining positional information indicating the location of said second communication terminal device based on said transmission information received by said fourth reception means; and

a fourth transmission means for sending the positional information obtained by said information processing means to said second communication terminal device.

21. The communication system of claim 20, wherein:

said transmission information obtained by the information acquisition means of said second communication terminal device is a base station identification information group composed of base station identification information concerning control channels whose receive signal strength indicate is comprised within a predetermined number of higher ranks among base station identification information obtained by sequentially receiving control channels of available public base stations;

said service center comprises a memory means wherein a plurality of combinations of base station identification information group and corresponding positional information thereof; and

said information processing means of said service center compares the base station identification information group as transmission information received by said fourth reception means and respective base station identification information group of the plurality of combinations stored in said memory means, and obtains, as positional information indicating the location of said second communication terminal device, said positional information composing said combination wherein the number of agreement of base station identification information is maximum.

22. The communication system of claim 20, wherein:

said transmission information obtained by the information acquisition means of said second communication terminal device is a base station identification information group composed of base station identification information concerning control channels whose receive signal strength indicate is comprised within a predetermined number of higher ranks among base station identification information obtained by sequentially receiving control channels of available public base stations, and receive signal strength indicate data of said time when respective base station identification information composing this base station identification information group is obtained;

said service center comprises a memory means storing a plurality of combinations of base station identification information group and corresponding positional information thereof; and

said information processing means of said service center divides respective base station identification information group of the plurality of combinations stored in said memory means and base station identification information group received by said fourth reception means as said positional information into a plurality of groups based on said receive signal strength indicating data, compares the base station identification information group received by said fourth reception means and respective base station identification information group of the plurality of combinations stored in said memory means for each group, and obtains said positional information composing said combination where the number of agreement of base station identification information group is maximum as positional information indicating the location of said second communication terminal device.

23. The communication system of claim 20, wherein:

said transmission information obtained by the information acquisition means of said second communication terminal device is a base station identification information group composed of base station identification information concerning control channels whose receive signal strength indicate is comprised within a predetermined number of higher ranks among base station identification information obtained by sequentially receiving control channels of available public base stations, and receive signal strength indicate data of said time when respective base station identification information composing this base station identification information group is obtained;

said information processing means of said service center obtains by operations the positional information indicating the location of said second communication terminal device using the base station identification information group received as said transmission information by said fourth reception means and said receive signal strength indicating data.

**24.** The communication system of claim 20, wherein:

said second communication terminal device further comprises a terminal confirmation means for confirming if said first communication terminal device is a terminal device allowed to transmit positional information; and if said terminal confirmation means confirms that said first communication terminal device is not a terminal allowed to transmit positional information, said third transmission means does not transmit said positional information to said service center.

**25.** The communication system of claim 21 or 22, wherein:

said fourth transmission means of said service center transmits said positional information to said second communication terminal device by adding accuracy data of that positional data, according to said number of agreement; and said third transmission means of said second communication terminal device transmits said positional information to said first communication terminal device by adding accuracy data of that positional data, when accuracy data of that positional data is added to the positional information received by said third reception means.

**26.** A communication terminal device, comprising:

a first transmission means for sending, to other communication terminal device, transmission information request signal necessary to obtain positional information indicating the location of said other communication terminal device from a service center; a first reception means for receiving said transmission information sent from said other communication terminal device; a second transmission means for sending said transmission information received by said first reception means to said service center; a second reception means for receiving positional information indicating the location of said other communication terminal device sent from said service center; and a reporting means for reporting the location indicated by said positional information received by said second reception means.

**27.** A communication terminal device, comprising:

an information acquisition means for obtaining transmission information necessary to obtain positional information indicating its own location from a service center; a reception means for receiving positional information request signal sent from said other communication terminal device; and a transmission means for sending said transmission information obtained by said information acquisition means to said other communication terminal device.

**28.** The communication system of claim 27, wherein:

said transmission information is base station identification information group composed of base station identification information concerning control channels whose receive signal strength indicate is comprised within a predetermined number of higher ranks among base station identification information obtained by sequentially receiving control channels of available public base stations.

**29.** The communication terminal device of claim 27, wherein:

said transmission information is base station identification information group composed of base station identification information concerning control channels whose receive signal strength indicate is comprised within a predetermined number of higher ranks among base station identification information obtained by sequentially receiving control channels of available public base stations, and receive signal strength indicate data of said time when respective base station identification information composing this base station identification information group is obtained.

**30.** The communication terminal device of claim 27, wherein:

said operation to obtain transmission information is executed periodically by said information acquisition means.

**31.** The communication terminal device of claim 27, wherein:

said operation to obtain transmission information is executed by said information acquisition means, when said reception means receives said request signal of transmission information.

**32.** A communication system, comprising:

a first communication terminal device, a second communication terminal device, and a service center, wherein: said first communication terminal device comprises:
a first transmission means for sending transmission information request signal necessary for obtaining positional information indicating the location of the second communication terminal device to said second communication terminal device;
a first reception means for receiving said transmission information transmitted by said second communication terminal device;
a second transmission means for sending said transmission information received by said first reception means to said service center;
a second reception means for receiving the positional information indicating the location of the second communication terminal device sent from the service center; and
a reporting means for reporting the location indicated by said positional information received by said second reception means,
said second communication terminal device comprises:
an information acquisition means for acquiring transmission information;
a third reception means for receiving the positional information request signal sent from said first communication terminal device; and
a third transmission means for sending said transmission information obtained by said information acquisition means to said first communication terminal device, when said third reception means receives said request signal of transmission information; and
said service center, comprises:
a fourth reception means for receiving transmission information sent from said first communication terminal device;
an information processing means for obtaining positional information indicating the location of said second communication terminal device based on transmission information received by said fourth reception means; and
a fourth transmission means for sending said positional information obtained by said information processing means to said first communication terminal device.

**33.** The communication system of claim 32, wherein:

said transmission information obtained by the information acquisition means of said second communication terminal device is a base station identification information group composed of base station identification information concerning control channels whose receive signal strength indicate is comprised within a predetermined number of higher ranks among base station identification information obtained by sequentially receiving control channels of available public base stations;
said service center comprises a memory means wherein a plurality of combinations of base station identification information group and corresponding positional information thereof; and
said information processing means of said service center compares the base station identification information group as transmission information received by said fourth reception means and respective base station identification information group of the plurality of combinations stored in said memory means, and obtains, as positional information indicating the location of said second communication terminal device, said positional information composing said combination wherein the number of agreement of base station identification information is maximum.

**34.** The communication system of claim 32, wherein:

said transmission information obtained by the information acquisition means of said second communication terminal device is a base station identification information group composed of base station identification information concerning control channels whose receive signal strength indicate is comprised within a predetermined number of higher ranks among base station identification information obtained by sequentially receiving control channels of available public base stations, and receive signal strength indicate data of said time when respective base station identification information composing this base station identification information group is obtained;

said service center comprises a memory means storing a plurality of combinations of base station identification information group and corresponding positional information thereof; and

said information processing means of said service center divides respective base station identification information group of the plurality of combinations stored in said memory means and base station identification information group received by said fourth reception means as said positional information into a plurality of groups based on said receive signal strength indicating data, compares the base station identification information group received by said fourth reception means and respective base station identification information group of the plurality of combinations stored in said memory means for each group, and obtains said positional information composing said combination where the number of agreement of base station identification information group is maximum as positional information indicating the location of said second communication terminal device.

35. The communication system of claim 32, wherein:

said transmission information obtained by the information acquisition means of said second communication terminal device is a base station identification information group composed of base station identification information concerning control channels whose receive signal strength indicate is comprised within a predetermined number of higher ranks among base station identification information obtained by sequentially receiving control channels of available public base stations, and receive signal strength indicate data of said time when respective base station identification information composing this base station identification information group is obtained;

said information processing means of said service center obtains by operations the positional information indicating the location of said second communication terminal device using the base station identification information group received as said transmission information by said fourth reception means and said receive signal strength indicating data.

36. The communication system of claim 32, wherein:

said second communication terminal device further comprises a terminal confirmation means for confirming if said first communication terminal device is a terminal device allowed to transmit positional information; and

if said terminal confirmation means confirms that said first communication terminal device is not a terminal allowed to transmit positional information, said third transmission means does not transmit said positional information to said service center.

37. The communication system of claim 33 or 34, wherein:

said fourth transmission means of said service center transmits said positional information to said second communication terminal device by adding accuracy data of that positional data, according to said number of agreement.

38. A communication terminal device, comprising:

a transmission means for sending positional information request signal to other communication terminal device;

a reception means for receiving positional information indicating the location of said other communication terminal device sent from said service center; and

a reporting means for reporting the location indicated by said positional information received by said reception means.

39. A communication terminal device, comprising:

an information acquisition means for obtaining transmission information necessary to obtain positional information indicating its own location from a service center;

a reception means for receiving positional information request signal sent by said other communication terminal device; and

a transmission means for sending transmission information obtained by said information acquisition means and said telephone number of said other communication terminal device to said service center.

40. The communication system of claim 39, wherein:

said transmission information is base station identification information group composed of base station identification information concerning control channels whose receive signal strength indicate is comprised within a predetermined number of higher ranks among base station identification information obtained by sequentially receiving control channels of available public base stations.

41. The communication terminal device of claim 39, wherein:

said transmission information is base station identification information group composed of base station identification information concerning control channels whose receive signal strength indicate is comprised within a predetermined number of higher ranks among base station identification information obtained by sequentially receiving control channels of available public base stations, and receive signal strength indicate data of said time when respective base station identification information composing this base station identification information group is obtained.

42. The communication terminal device of claim 39, wherein:

said operation to obtain transmission information is executed periodically by said information acquisition means.

43. The communication terminal device of claim 39, wherein:

said operation to obtain transmission information is executed by said information acquisition means, when said reception means receives said request signal of transmission information.

44. A communication system, comprising:

a first communication terminal device, a second communication terminal device, and a service center, wherein:
said first communication terminal device comprises:
a first transmission means for sending positional information request signal to said second communication terminal device;
a first reception means for receiving positional information of said second communication terminal device transmitted by said service center; and
a reporting means for reporting the location indicated by said positional information received by said first reception means,
said second communication terminal device comprises:
an information acquisition means for acquiring transmission information necessary to obtain positional information indicating its own location from the service center;
a second reception means for receiving said positional information request signal sent from said first communication terminal device; and
a second transmission means for sending said transmission information obtained by said information acquisition means and the telephone number of said first communication terminal device to said service center, when said second reception means receives said request signal of transmission information;
and said service center, comprises:
a third reception means for receiving said transmission information sent from said second communication terminal device and the telephone number of said first communication terminal device;
an information processing means for obtaining positional information indicating the location of said second communication terminal device based on said transmission information received by said third reception means; and
a third transmission means for sending the positional information obtained by said information processing means to said first communication terminal device, using the telephone number of said first communication terminal device received by said third reception means.

**45.** The communication system of claim 44, wherein:

said transmission information obtained by the information acquisition means of said second communication terminal device is a base station identification information group composed of base station identification information concerning control channels whose receive signal strength indicate is comprised within a predetermined number of higher ranks among base station identification information obtained by sequentially receiving control channels of available public base stations;

said service center comprises a memory means storing a plurality of combinations of base station identification information group and corresponding positional information thereof; and

said information processing means of said service center compares the base station identification information group as transmission information received by said third reception means and respective base station identification information group of the plurality of combinations stored in said memory means, and obtains, as positional information indicating the location of said second communication terminal device, said positional information composing said combination wherein the number of agreement of base station identification information is maximum.

**46.** The communication system of claim 44, wherein:

said transmission information obtained by the information acquisition means of said second communication terminal device is a base station identification information group composed of base station identification information concerning control channels whose receive signal strength indicate is comprised within a predetermined number of higher ranks among base station identification information obtained by sequentially receiving control channels of available public base stations, and receive signal strength indicate data of said time when respective base station identification information composing this base station identification information group is obtained;

said service center comprises a memory means storing a plurality of combinations of base station identification information group and corresponding positional information thereof; and

said information processing means of said service center divides respective base station identification information group of the plurality of combinations stored in said memory means and base station identification information group received by said third reception means as said positional information into a plurality of groups based on said receive signal strength indicating data, compares the base station identification information group received by said third reception means and respective base station identification information group of the plurality of combinations stored in said memory means for each group, and obtains said positional information composing said combination where the number of agreement of base station identification information group is maximum as positional information indicating the location of said second communication terminal device.

**47.** The communication system of claim 44, wherein:

said transmission information obtained by the information acquisition means of said second communication terminal device is a base station identification information group composed of base station identification information concerning control channels whose receive signal strength indicate is comprised within a predetermined number of higher ranks among base station identification information obtained by sequentially receiving control channels of available public base stations, and receive signal strength indicate data of said time when respective base station identification information composing this base station identification information group is obtained;

said information processing means of said service center obtains by operations the positional information indicating the location of said second communication terminal device using the base station identification information group received as said transmission information by said third reception means and said receive signal strength indicating data.

**48.** The communication system of claim 44, wherein:

said second communication terminal device further comprises a terminal confirmation means for confirming if said first communication terminal device is a terminal device allowed to transmit positional information; and

if said terminal confirmation means confirms that said first communication terminal device is not a terminal allowed to transmit positional information, said second transmission means does not transmit said positional information and the telephone number of said first communication terminal device to said service center.

**49.** The communication system of claim 45 or 46, wherein:

said third transmission means of said service center transmits said positional information to said second communication terminal device by adding accuracy data of that positional data, according to said number of agreement.

# F I G. 1

13

S11 → SERVICE CENTER ← S12

S14 S13

A B

11 12

10

# F I G. 1 0

23

SERVICE CENTER S23

S22

S21

A B

S23

21 22

20

# FIG. 2

**100**

- **102** (antenna)
- **103** RADIO SECTION
- **104** DIGITAL MODEM SECTION
- **105** TDMA PROCESSING SECTION
- **106** SOUND CODEC SECTION
- **107**
- **108**
- **114** (switch a, b)
- **112**
- **111**
- **109** DTMF DEMODULATOR
- **113** DTMF MODULATOR
- **101** CONTROL SECTION
- **119** ROM
- **120** RAM
- **117** NONVOLATILE MEMORY
- **118** RING TONE OUTPUT SECTION
- **115** OPERATION SECTION
- **116** DISPLAY SECTION

EP 1 061 756 A1

# F I G. 3

SLOTS USED BY CS

UPWARD LOGICAL CONTROL CHANNEL(LCCH)

DOWNWARD LOGICAL CONTROL CHANNEL(LCCH)

5 × n ms(DOWNWARD INTERMITTENT TRANSMISSION PERIOD)

5ms(TDMA FRAME)

DOWNWARD (TRANSMISSION)   UPWARD (RECEPTION)

5 × n × m ms

LCCH SUPER-FRAME

| BCCH | PCH | SCCH |

| PCH1 | PCH2 | PCH3 | · · · | PCHn |

EP 1 061 756 A1

# F I G. 4

# F I G. 5

SCCH 218

CALL IDENTIFICATION CODE

INCOMING CALL IDENTIFICATION CODE (PS CALL CODE)

| | 62 | 32 | 4 | 42 | 28 | 34 | 16 |
|---|---|---|---|---|---|---|---|
| (CS→PS) | PR | UW | CI | | | DATA (SCCH) | CRC |

| 9 | n | 33-n |
|---|---|---|
| | | |

OPERATOR IDENTIFICATION CODE

PAGING AREA NUMBER

ADDITIONAL ID

| 8 | 8 | 8 | 8 | 2 |
|---|---|---|---|---|
| OCTET 1 | OCTET 2 | OCTET 3 | OCTET 4 | OCTET 5 |

| OCTET \ BIT | 8 | 7 | 6 | 5 | 4 | 3 | 2 | 1 |
|---|---|---|---|---|---|---|---|---|
| 1 | | MESSAGE TYPE | | | | | | |
| 2 | | | | | | | | |
| 3 | | | | | | | | |
| 4 | | | | | | | | |
| 5 | | | | | | | | |

EP 1 061 756 A1

# F I G. 6

| OCTET \ BIT | 8 | 7 | 6 | 5 | 4 | 3 | 2 | 1 |
|---|---|---|---|---|---|---|---|---|
| 1 | | CALL SERVICE TYPE | | | PS NUMBER (1ST DIGIT) | | | |
| 2 | PS NUMBER (2ND DIGIT) | | | | PS NUMBER (3RD DIGIT) | | | |
| 3 | PS NUMBER (4TH DIGIT) | | | | PS NUMBER (5TH DIGIT) | | | |
| 4 | PS NUMBER (6TH DIGIT) | | | | PS NUMBER (7TH DIGIT) | | | |
| 5 | PS NUMBER (8TH DIGIT) | | | | PS NUMBER (9TH DIGIT) | | | |
| 6 | PS NUMBER (10TH DIGIT) | | | | PS NUMBER (11TH DIGIT) | | | |
| 7 | PS NUMBER (12TH DIGIT) | | | | PS NUMBER (13TH DIGIT) | | | |
| 8 | | | | INFORM RECEPTION INSTRUCTION | | | | |

EP 1 061 756 A1

F I G. 7

|←LCCH SUPER-FRAME→|

BCCH PCH1 ... PCH● ... PCHn SCCH BCCH PCH1 ... PCH● ... PCHn SCCH BCCH PCH1 ... PCH● ... PCHn SCCH BCCH PCH1

RECEIVE BCCH  RECEIVE PCHa        RECEIVE PCHa        RECEIVE PCHa

CALCULATE RECEPTION
TIMING

EP 1 061 756 A1

# F I G. 8

SLOTS USED BY CS

DOWNWARD (TRANSMISSION)

UPWARD (RECEPTION)

TRANSMIT PS

RECEIVE PS

EP 1 061 756 A1

# F I G. 9

```
  (TERMINAL 11)         SERVICE CENTER 13         (TERMINAL 12)
        |                      |                        |
        |  ST111               |                        |
   ┌────┴──────────────┐       |                        |
   │POSITIONAL INFORMATION│    |                        |
   │ACQUISITION OPERATION │    |                        |
   └────┬──────────────┘       |                        |
        |  ST112               |                        |
   ┌────┴──────────────┐  S11  |  ST131                 |
   │TELEPHONE NUMBER   │──────▶|                        |
   │TRANSMISSION       │   ┌───┴───────────┐            |
   └────┬──────────────┘   │ SECURITY CHECK│            |
        |                  └───┬───────────┘            |
        |                      |   ST132                |
        |        ┌─────────────┴─────────────┐  S12     |
        |        │TRANSMISSION OF BASE STATION│────────▶|
        |        │IDENTIFICATION INFORMATION GROUP│     |
        |        │REQUEST SIGNAL             │          |  ST121
        |        └─────────────┬─────────────┘   ┌──────┴──────────────┐
        |                      |                 │ACQUISITION OF BASE STATION│
        |                      |                 │IDENTIFICATION INFORMATION│
        |                      |                 │GROUP BY SEARCH OPERATION│
        |                      |                 └──────┬──────────────┘
        |                      |                        |  ST122
        |                      |   S13  ┌───────────────┴──────┐
        |                      |◀───────│TRANSMISSION OF BASE STATION│
        |   ST133              |        │IDENTIFICATION INFORMATION│
   ┌────┴───────────────────────┐       │GROUP                 │
   │ACQUISITION OF POSITIONAL INFORMATION│└──────────────────────┘
   │CORRESPONDING TO BASE STATION│        |                        |
   │IDENTIFICATION INFORMATION GROUP│     |                        |
   └────┬───────────────────────┘        |                        |
        |   ST134               |         |                        |
        |  S14  ┌───────────────┴────┐    |                        |
   ST113|◀──────│TRANSMISSION OF     │    |                        |
   ┌────┴───────┐│POSITIONAL INFORMATION│ |                        |
   │DISPLAY OF LOCATION INDICATED│└──────┘ |                        |
   │BY POSITIONAL INFORMATION│             |                        |
   └────┬───────┘             |            |                        |
        |                      |                        |
```

EP 1 061 756 A1

# F I G. 1 1

```
 (TERMINAL 21)        (TERMINAL 22)        SERVICE CENTER 23
```

ST211
┌─────────────────────────┐
│ POSITIONAL INFORMATION   │
│ ACQUISITION OPERATION    │
└─────────────────────────┘

ST212
┌─────────────────────────┐      S21
│ TRANSMISSION OF          │ ──────────▶     ST221
│ POSITIONAL INFORMATION   │             ┌─────────────────┐
│ REQUEST SIGNAL           │             │ SECURITY CHECK  │
└─────────────────────────┘             └─────────────────┘

ST222
┌──────────────────────────────┐
│ ACQUISITION OF BASE STATION   │
│ IDENTIFICATION INFORMATION    │
│ GROUP BY SEARCH OPERATION     │
└──────────────────────────────┘

ST223
┌──────────────────────────────┐      S22
│ TRANSMISSION OF BASE STATION  │ ──────────▶     ST231
│ IDENTIFICATION INFORMATION    │             ┌────────────────────────────┐
│ GROUP                         │             │ ACQUISITION OF POSITIONAL   │
└──────────────────────────────┘             │ INFORMATION CORRESPONDING TO│
                                              │ BASE STATION IDENTIFICATION │
                                              │ INFORMATION GROUP           │
                                              └────────────────────────────┘

                                                              ST232
                       ST224        S23              ┌──────────────────────┐
                              ◀──────────            │ TRANSMISSION OF       │
                    ┌──────────────────────┐         │ POSITIONAL INFORMATION│
                    │ STORAGE OF RECEIVED   │         └──────────────────────┘
                    │ POSITIONAL INFORMATION│
                    └──────────────────────┘

                       ST225
            ST213      S23     ┌──────────────────────┐
                   ◀──────────  │ TRANSMISSION OF       │
                                │ POSITIONAL INFORMATION│
                                └──────────────────────┘
┌──────────────────────────────┐
│ DISPLAY OF LOCATION INDICATED │
│ BY POSITIONAL INFORMATION     │
└──────────────────────────────┘

34

# F I G. 1 2

## 3 0

# F I G. 1 4

## 4 0

# FIG. 13

SERVICE CENTER 33          TERMINAL 31          TERMINAL 32

ST311

POSITIONAL INFORMATION
ACQUISITION OPERATION

ST312

TRANSMISSION OF BASE STATION
IDENTIFICATION INFORMATION GROUP          S31
REQUEST SIGNAL

ST321

SECURITY CHECK

ST322

ACQUISITION OF BASE STATION
IDENTIFICATION INFORMATION
GROUP BY SEARCH OPERATION

ST323

S32          TRANSMISSION OF BASE STATION
IDENTIFICATION INFORMATION
GROUP

ST313

STORAGE OF RECEIVED BASE STATION
IDENTIFICATON INFORMATION GROUP

ST314

S32          TRANSMISSION OF BASE STATION
IDENTIFICATON INFORMATION GROUP

ST331

ACQUISITION OF POSITIONAL
INFORMATION CORRESPONDING TO
BASE STATION IDENTIFICATION
INFORMATION GROUP

ST332

TRANSMISSION OF          S33
POSITIONAL INFORMATION

ST315

DISPLAY OF LOCATION INDICATED
BY POSITIONAL INFORMATION

# F I G. 1 5

| SERVICE CENTER 43 | TERMINAL 41 | TERMINAL 42 |
|---|---|---|

ST411

POSITIONAL INFORMATION
ACQUISITION OPERATION

ST412

TRANSMISSION OF
POSITIONAL INFORMATION
REQUEST SIGNAL → S41

ST421

SECURITY CHECK

ST422

ACQUISITION OF BASE STATION
IDENTIFICATION INFORMATION
GROUP BY SEARCH OPERATION

ST423

S42a,S42b ←

TRANSMISSION OF BASE STATION
IDENTIFICATION INFORMATION
GROUP

ST431

ACQUISITION OF POSITIONAL
INFORMATION CORRESPONDING TO
BASE STATION IDENTIFICATION
INFORMATION GROUP

ST432

TRANSMISSION OF
POSITIONAL INFORMATION → S43

ST413

DISPLAY OF LOCATION INDICATED
BY POSITIONAL INFORMATION

37

# F I G. 1 6

# INTERNATIONAL SEARCH REPORT

| International application No. |
|---|
| PCT/JP99/00722 |

| A. | CLASSIFICATION OF SUBJECT MATTER |
|---|---|
| | Int.Cl⁶ H04Q7/32 |

According to International Patent Classification (IPC) or to both national classification and IPC

| B. | FIELDS SEARCHED |
|---|---|

Minimum documentation searched (classification system followed by classification symbols)
Int.Cl⁶ G01S5/00-5/14, H04B7/24-7/26, H04Q7/00-7/38

Documentation searched other than minimum documentation to the extent that such documents are included in the fields searched

| Jitsuyo Shinan Koho | 1926-1999 | Toroku Jitsuyo Shinan Koho | 1994-1999 |
|---|---|---|---|
| Kokai Jitsuyo Shinan Koho | 1971-1999 | Jitsuyo Shinan Toroku Koho | 1996-1999 |

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP, 08-126060, A (Casio Computer Co., Ltd.), 17 May, 1996 (17. 05. 96) (Family: none) | 1, 2, 6, 7 |
| Y | | 3-5, 8-12 |
| A | | 13, 15-38, 44-49 |
| Y | JP, 09-182144, A (Nippon Denki Ido Tsushin K.K.), 11 July, 1997 (11. 07. 97), Column 5, line 4 to column 7, line 22 (Family: none) | 3, 4, 8, 9, 40, 41 |
| Y | JP, 09-224280, A (Casio Computer Co., Ltd.), 26 August, 1997 (26. 08. 97), Column 4, lines 37 to 40 (Family: none) | 5, 42 |
| Y | JP, 07-231473, A (NTT Mobile Communications Network Inc.), 29 August, 1995 (29. 08. 95), Column 7, line 19 to column 8, line 30 (Family: none) . | 10 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | | |
| | | "&" | document member of the same patent family |

| Date of the actual completion of the international search | Date of mailing of the international search report |
|---|---|
| 12 May, 1999 (12. 05. 99) | 25 May, 1999 (25. 05. 99) |

| Name and mailing address of the ISA/ | Authorized officer |
|---|---|
| Japanese Patent Office | |
| Facsimile No. | Telephone No. |

Form PCT/ISA/210 (second sheet) (July 1992)

## INTERNATIONAL SEARCH REPORT

| | International application No. |
|---|---|
| | PCT/JP99/00722 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP, 06-165246, A   (NTT Mobile Communications Network Inc.),<br>10 June, 1994 (10. 06. 94),<br>Column 5, lines 14 to 42   (Family: none) | 11 |
| Y | JP, 06-189359, A   (NEC Corp.),<br>8 July, 1994 (08. 07. 94),<br>Column 3, lines 5 to 9   (Family: none) | 12 |
| Y | JP, 09-178833, A   (Sony Corp.),<br>11 July, 1997 (11. 07. 97),<br>Column 8, line 5 to column 9, line 42<br>&   KR, 97055833, A | 14, 39 |

Form PCT/ISA/210 (continuation of second sheet) (July 1992)